# EUROPEAN PATENT SPECIFICATION

(11) **EP 4 090 707 B1**
(45) Date of publication and mention of the grant of the patent: **04.12.2024**
(21) Application number: 20800502.5
(22) Date of filing: 13.10.2020
(51) Int. Cl.: C08L 69/00, C08K 5/1535, C08G 64/12, C08G 64/08, C08K 5/00

(54) **ARYL BENZOFURANONE- STABILIZED POLYCARBONATE COMPOSITIONS, METHODS OF MAKING, AND ARTICLES FORMED THEREFROM**
MIT ARYLBENZOFURANON STABILISIERTE POLYCARBONATZUSAMMENSETZUNGEN, VERFAHREN ZUR HERSTELLUNG UND DARAUS HERGESTELLTE GEGENSTÄNDE
COMPOSITIONS DE POLYCARBONATE STABILISÉES PAR L'ARYLBENZOFURANONE, PROCÉDÉS DE FABRICATION ET ARTICLES FORMÉS À PARTIR DE CES COMPOSITIONS

(30) Priority: 04.12.2019 US 201962943448 P
(43) Date of publication of application: 23.11.2022
(73) Proprietor: SHPP Global Technologies B.V., 4612 PX Bergen op Zoom (NL)
(72) Inventor: SYBERT, Paul Dean, Mt. Vernon, Indiana 47620 (US); GALLUCCI, Robert Russell, Mt. Vernon, Indiana 47620 (US); GINDT, Brandon Philippe, Mt. Vernon, Indiana 47620 (US)
(74) Representative: Balder IP Law, S.L.
(86) International application number: PCT/US2020/055379
(87) International publication number: WO 2021/112957

(56) References cited:
- WO-A1-2019/099057
- US-A1- 2007 010 619

## Description

### BACKGROUND

This disclosure relates to polycarbonate compositions, and in particular to aryl benzofuranone-stabilized polycarbonate compositions, methods of manufacture, and uses thereof.

Polycarbonates are useful in the manufacture of articles and components for a wide range of applications, from automotive parts to electronic appliances. Because of their broad use, particularly in high-heat application such as lenses and sensors, it is desirable to provide polycarbonate compositions with low color shift on long term aging. For example, US2007/010619A1 discloses a polycarbonate composition comprising a high heat polycarbonate and optionally sulfur-containing stabilizers, having low levels of colored impurities. Nevertheless, no disclosure regarding a long-term reduction of yellowness caused by aging is made. Attempts to incorporate stabilizing additives to polycarbonates have been made, such as phenolic antioxidants, organic phosphite or phosphine stabilizers, and benzofuranone stabilizers, for example in WO2019/099057A1, which discloses polycarbonate compositions obtained from bisphenol A and phosgene or a phosgene analogues, further comprising one or more additives selected from the group consisting of benzofuranone stabilizers.

There accordingly remains a need in the art for polycarbonate compositions that are stable to long term aging. It would be a further advantage to provide polycarbonate compositions stable to long term aging when increased sulfur levels are present in the polycarbonate composition.

### BRIEF DESCRIPTION

The above-described and other deficiencies of the art are met by a polycarbonate composition comprising: a high heat copolycarbonate comprising high heat carbonate units, wherein a homopolycarbonate of the high heat carbonate units has a glass transition temperature of 155-250 °C as determined by differential scanning calorimetry as per ASTM D3418 with a heating rate 20 °C/min and wherein the high heat carbonate units comprise formula 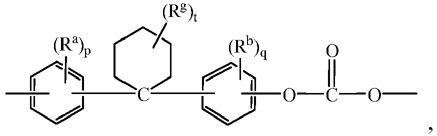 or a combination of formula 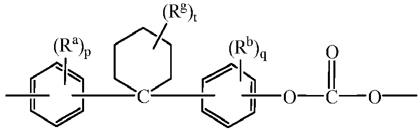 and formula 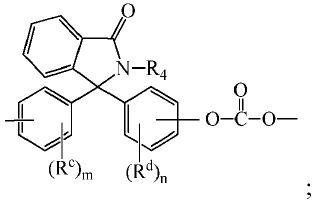 and optionally low heat carbonate units, wherein a homopolycarbonate of the low heat carbonate units has a glass transition temperature of up to 150 °C as determined by differential scanning calorimetry as per ASTM D3418 with heating rate of 20 °C/min, wherein: R^{a} and R^{b} are each independently C₁₋₁₂ alkyl, R^{g} is C₁₋₁₂ alkyl, p and q are each independently 0-4, and t is 0-10; R^{c} and R^{d} are each independently a C₁₋₁₂ alkyl, C₂₋₁₂ alkenyl, C₃₋₈ cycloalkyl, or C₁₋₁₂ alkoxy, ; m and n are each independently 0-4, each R³ is independently C₁₋₄ alkyl or hydrogen, R⁴ is C₁₋₆ alkyl or phenyl optionally substituted with 1-5 C₁₋₆ alkyl groups, and g is 0-10; greater than 200 to 5000 ppm of an aryl benzofuranone stabilizer; optionally, 5-100 ppm of a sulfur-containing stabilizer compound; optionally, 2-40 ppm of an organosulfonic stabilizer; optionally, a bisphenol A homopolycarbonate; each based on the total parts by weight of the composition, wherein a molded sample of the composition having a thickness of 3.2 millimeters and aged for 250 hours at 150 °C has a change in a yellowness index value of less than 6.0, or less than 5.0, or less than 3.0 as compared with an initial yellowness index value of the molded sample, as measured in accordance with ASTM D1925.

In another aspect, a method of manufacture comprises combining the above-described components to form a polycarbonate composition.

In yet another aspect, an article comprises the above-described polycarbonate composition.

In still another aspect, a method of manufacture of an article comprises molding, extruding, or shaping the above-described polycarbonate composition into an article.

The above described and other features are exemplified by the following drawings, detailed description, examples, and claims.

### DETAILED DESCRIPTION

Color and color stability are an important requirement for various high temperature applications including lenses and sensors. High-heat polycarbonate resins with either benzylic or tertiary protons are especially susceptible to color shift on heat aging. Thus, it would be beneficial to mitigate the color shift on long-term heat aging. It would be especially beneficial to mitigate the color shift on long term heat aging when increased sulfur levels are present whether intentionally added or as of a result of impurities in the monomers or process chemicals.

Surprisingly, the inventors hereof have discovered that the addition of aryl benzofuranone stabilizers can dramatically improve the color stability of high heat copolycarbonates upon aging. This is a surprising result because sulfur impurities produced during monomer synthesis are associated with undesirable color formation in high heat copolycarbonate compositions. Advantageously, in the case of compositions with added sulfur stabilizers, aryl benzofuranone stabilizers suppressed the shift that has been observed for polycarbonate compositions that include sulfur-containing stabilizer compounds. The polycarbonate compositions include a high heat copolycarbonate comprising high heat aromatic carbonate units, optionally low heat carbonate units, an aryl benzofuranone stabilizer, and optionally, a sulfur-containing stabilizer compound.

As stated above, the high heat copolycarbonates can comprise repeating carbonate units including low heat carbonate units (1) and high heat aromatic carbonate units (2) 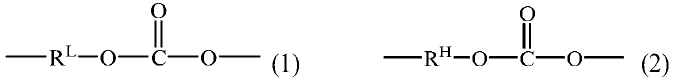 wherein R^{L} is derived from the corresponding low heat aromatic dihydroxy monomer and R^{H} is derived from the corresponding high heat aromatic dihydroxy monomer. Each of these is described in further detail below.

As used herein, a "low heat aromatic dihydroxy monomer" means a compound that can be used to manufacture a polycarbonate homopolymer having a Tg of 120-150 °C, as determined by differential scanning calorimetry (DSC) as per ASTM D3418 with a 20 °C/min heating rate. Such monomers generally have 18 or fewer carbon atoms. Exemplary low heat aromatic groups (R^{L} groups) in low heat aromatic carbonate units (1) can be of formula (1a) 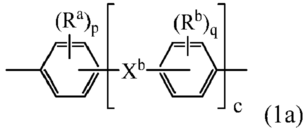 wherein R^{a} and R^{b} are each independently a halogen, C₁₋₃ alkoxy, or C₁₋₃ alkyl, c is 0-4, and p and q are each independently integers of 0 or 1. In an aspect, p and q is each 0, or p and q is each 1 and R^{a} and R^{b} are each a methyl, disposed meta to the hydroxy group on each arylene group. X^{a} in formula (3) is a bridging group connecting the two hydroxy-substituted aromatic groups, where the bridging group and the hydroxy substituent of each C₆ arylene group are disposed ortho, meta, or para (preferably para) to each other on the C₆ arylene group, for example, a single bond, -O-, -S-, -S(O)-, -S(O)₂-, -C(O)-, or a C₁₋₆ organic group, which can be cyclic or acyclic, aromatic or non-aromatic, and can further comprise heteroatoms such as halogens, oxygen, nitrogen, sulfur, silicon, or phosphorous. For example, X^{a} can be a C₃₋₆ cycloalkylidene, a C₁₋₆ alkylidene of the formula -C(R^{c})(R^{d}) - wherein R^{c} and R^{d} are each independently hydrogen, C₁₋₅ alkyl, or a group of the formula -C(=R^{e})- wherein R^{e} is a divalent C₁₋₅ hydrocarbon group. Some illustrative examples of dihydroxy compounds that can be used are described, for example, in WO 2013/175448 A1, US 2014/0295363, and WO 2014/072923.

In an aspect, the low heat aromatic group is of the formula 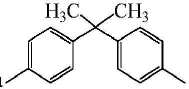 and can be derived from 2,2-is (4-hydroxyphenyl)propane), also known as bisphenol A (BPA). The high heat aromatic carbonate units (2) can be derived from the corresponding high heat bisphenol monomers. As used herein, "high heat bisphenol monomer" means a monomer where the corresponding homopolycarbonate of the monomer has a Tg of 155°C or greater. A low heat bisphenol monomer is a monomer where the corresponding homopolycarbonate of the monomer has a Tg of less than 155°C. Preferably the low heat bisphenol monomer is a monomer where the corresponding homopolycarbonate has a Tg of less than 150°C, or less than 145°C, and the high heat bisphenol monomer is a monomer where the corresponding homopolycarbonate has a Tg of 160°C or greater, or 165°C or greater. The homopolycarbonate formed by the low heat monomer can have a minimum Tg of 80°C. The homopolycarbonate formed by the high heat monomer can have a maximum Tg of 400°C. In an aspect, the high heat copolycarbonate has a Tg of 155°C -250°C, 170-250°C, or 175°C-240°C, or 180°C-240°C, or 190°C-240°C. Each of the Tgs of the homopolycarbonates and the copolycarbonates can be determined by differential scanning calorimetry as per ASTM D3418 with a heating rate 20 °C/min.

Such monomers generally have 19 or more carbon atoms. Exemplary R^{H} groups in high heat aromatic carbonate units (2) can be of formulas (2a)-(2g) 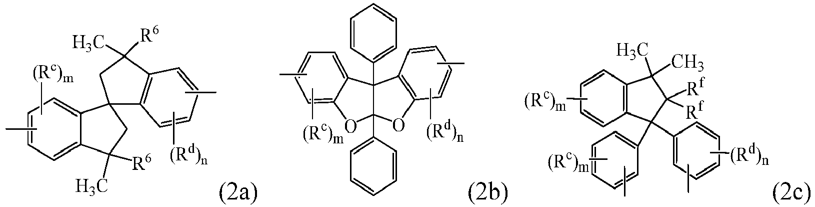 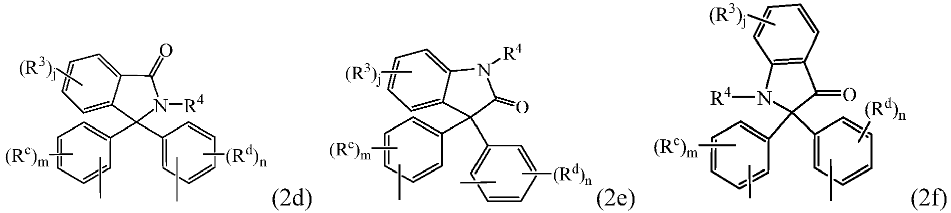 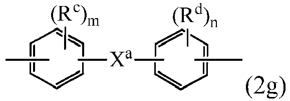 wherein R^{c} and R^{d} are each independently a C₁₋₁₂ alkyl, C₂₋₁₂ alkenyl, C₃₋₈ cycloalkyl, or C₁₋₁₂ alkoxy, each R^{f} is hydrogen or both R^{f} together are a carbonyl group, each R³ is independently C₁₋₆ alkyl, R⁴ is hydrogen, C₁₋₆ alkyl, or phenyl optionally substituted with 1-5 C₁₋₆ alkyl groups, R⁶ is independently C₁₋₃ alkyl or phenyl, preferably methyl, X^{a} is a C₆₋₁₂ polycyclic aryl, C₃₋₁₈ mono- or polycycloalkylene, C₃₋₁₈ mono- or polycycloalkylidene, -C(R^{h})(R^{g})- group wherein R^{h} is hydrogen, C₁₋₁₂ alkyl, or C₆₋₁₂ aryl and R^{g} is C₆₋₁₂ aryl, or -(Q^{a})ₓ-G-(Q^{b})_{y}- group wherein Q^{a} and Q^{b} are each independently a C₁₋₃ alkylene, G is a C₃₋₁₀ cycloalkylene, x is 0 or 1, and y is 1, and j, m, and n are each independently 0-4. A combination of high heat aromatic groups can be used.

In an aspect, R^{c} and R^{d} are each independently a C₁₋₃ alkyl, or C₁₋₃ alkoxy, each R⁶ is methyl, each R³ is independently C₁₋₃ alkyl, R⁴ is methyl, or phenyl, each R⁶ is independently C₁₋₃ alkyl, or phenyl, preferably methyl, X^{a} is a C₆₋₁₂ polycyclic aryl, C₃₋₁₈ mono-or polycycloalkylene, C₃₋₁₈ mono- or polycycloalkylidene, -C(R^{f})(R^{g})- wherein R^{f} is hydrogen, C₁₋₁₂ alkyl, or C₆₋₁₂ aryl and R^{g} is C₆₋₁₀ alkyl, C₆₋₈ cycloalkyl, or C₆₋₁₂ aryl, or -(Q¹)ₓ-G-(Q²)_{y}-group, wherein Q¹ and Q² are each independently a C₁₋₃ alkylene and G is a C₃₋₁₀ cycloalkylene, x is 0 or 1, and y is 0 or 1, and j, m, and n are each independently 0 or 1.

Exemplary high heat aromatic groups R^{H} include those of the formulas: 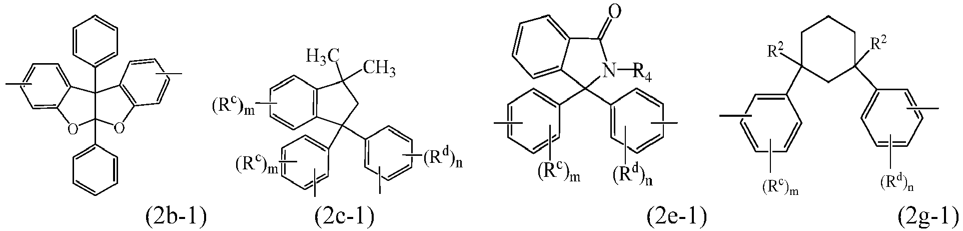 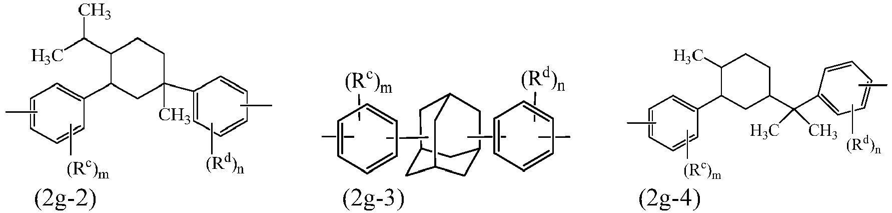 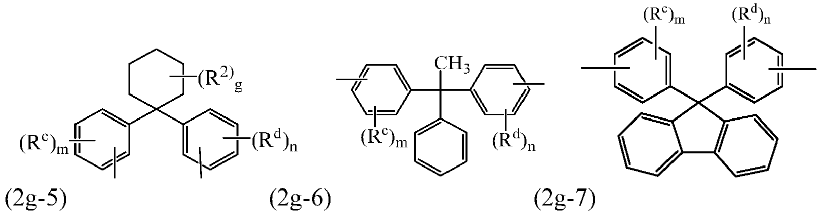 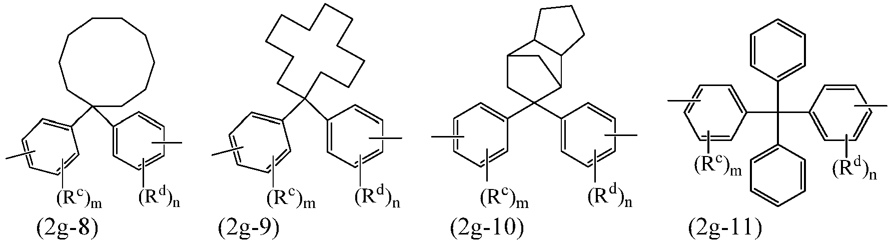 wherein R^{c} and R^{d} are the same as defined for formulas (2a)-(2g), each R² is independently C₁₋₄ alkyl, m and n are each independently 0-4, each R³ is independently C₁₋₄ alkyl or hydrogen, R⁴ is C₁₋₆ alkyl or phenyl optionally substituted with 1-5 C₁₋₆ alkyl groups, and g is z10. In a specific aspect each bond of the bisphenol group is located para to the linking group that is X^{a}. In an aspect, R^{c} and R^{d} are each independently a C₁₋₃ alkyl, or C₁₋₃ alkoxy, each R² is methyl, x is 0 or 1, y is 1, and m and n are each independently 0 or 1.

The high heat aromatic group is preferably of the formulas 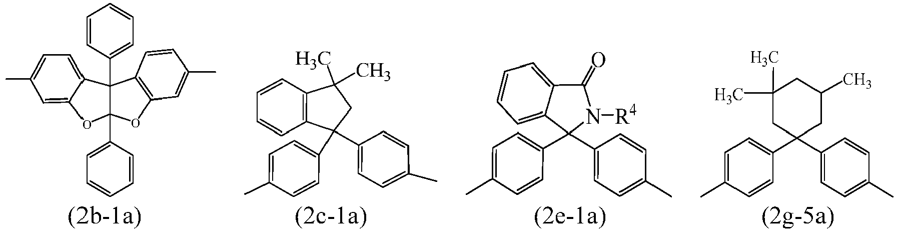 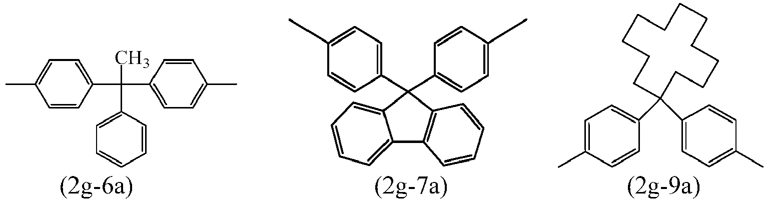 wherein R⁴ is methyl or phenyl, each R² is methyl, and g is 1-4. Preferably, the high heat bisphenol group is derived from 2-phenyl-3,3'-bis(4-hydroxyphenyl) phthalimidine (PPPBP) or from 1,1-bis(4-hydroxyphenyl)-3,3,5-trimethyl-cyclohexane (BP-TMC).

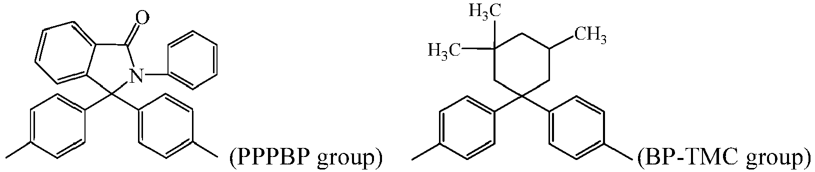

Preferably, the high heat aromatic group is derived from the corresponding bisphenol, in particular from 3,8-dihydroxy-5a,10b-diphenyl-coumarano-2',3',2,3-coumarane (corresponding to structure 2b-1a), 4,4'-(3,3-dimethyl-2,2-dihydro-1H-indene-1,1-diyl)diphenol (corresponding to structure 2c-1a), 2-phenyl-3,3'-bis(4-hydroxyphenyl) phthalimidine (PPPBP) (corresponding to structure 2e-1a), 1,1-bis(4-hydroxyphenyl)-3,3,5-trimethyl-cyclohexane (BPI) (corresponding to structure 2g-5a), 4,4'-(1-phenylethylidene)bisphenol (corresponding to structure 2g-6a), 9,9-bis(4-hydroxyphenyl)fluorene (corresponding to structure (2g-7a), 1,1-bis(4-hydroxyphenyl)cyclododecane (corresponding to structure 2g-9a), or a combination thereof.

The high heat copolycarbonates can comprise: 5-98 mole percent (mol%) of the low heat carbonate units (1), preferably bisphenol A carbonate units and 2-95 mol% of the high heat aromatic carbonate units (2). Preferably, the high heat carbonate units are derived from BPI, PPPBP, or a combination thereof. If a combination of two high heat aromatic monomers is used, such as BPI and PPPBP, the high heat copolycarbonate can have 5-95 mol% of a first high heat aromatic carbonate units and 5-95 mol% of a second high heat aromatic carbonate units, or 20-80 mol% of the first high heat aromatic carbonate units and 20-80 mol% of the second high heat aromatic carbonate units, or 30-70 mol% of the first high heat aromatic carbonate units and 30-70 mol% of the second high heat aromatic carbonate units, each based on the total number of carbonate units in the high heat copolycarbonates.

In another aspect, the high heat copolycarbonates can comprise 10-80 mol% of the low heat carbonate units (1), preferably bisphenol A carbonate units, and 20-90 mol% of the high heat aromatic carbonate units (2). Preferably, the high heat carbonate units are derived from BPI, PPPBP, or a combination thereof. If a combination of two high heat aromatic monomers is used, such as BPI and PPPBP, the high heat copolycarbonate can have 5-95 mol% of the first high heat aromatic carbonate units and 5-95 mol% of the second high heat aromatic carbonate units, or 20-80 mol% of the first high heat aromatic carbonate units and 20-80 mol% of the second high heat aromatic carbonate units, or 30-70 mol% of the first high heat aromatic carbonate units and 30-70 mol% of the second high heat aromatic carbonate units, each based on the total number of carbonate units in the high heat copolycarbonates.

In another aspect, the high heat copolycarbonate can comprise: 20-70 mol% of low heat aromatic carbonate units (1), preferably bisphenol A carbonate units, and 30-80 mol% of the high heat aromatic carbonate units (2). Preferably, the high heat carbonate units are derived from BPI, PPPBP, or a combination thereof. If a combination of two high heat aromatic monomers is used, such as BPI and PPPBP, the high heat copolycarbonate can have 5-95 mol% of the first high heat aromatic carbonate units and 5-95 mol% of the second high heat aromatic carbonate units, or 20-80 mol% of the first high heat aromatic carbonate units and 20-80 mol% of the second high heat aromatic carbonate units, or 30-70 mol% of the first high heat aromatic carbonate units and 30-70 mol% of the second high heat aromatic carbonate units, each based on the total number of carbonate units in the high heat copolycarbonates.

The high heat copolycarbonates can be manufactured by processes such as interfacial polymerization and melt polymerization, which are known, and are described for example in WO 2013/175448 A1 and WO 2014/072923 A1. Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05-2.0 wt%. Combinations of linear polycarbonates and branched polycarbonates can be used.

An end-capping agent (also referred to as a chain stopper agent or chain terminating agent) can be included during polymerization to provide end groups, for example monocyclic phenols such as phenol, p-cyanophenol, and C₁₋₂₂ alkyl-substituted phenols such as p-cumyl-phenol, resorcinol monobenzoate, and p-and tertiary-butyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used. The high heat copolycarbonates can comprise a phenolic endcap content of level less than or equal to 150 ppm, or less than or equal to 125 ppm, or less than or equal to 100 ppm, or less than or equal to 75 ppm, or less than or equal to 50 ppm; or a carbamate endcap content of less than 15 ppm, or less than 10 ppm, or less than 5 ppm; or a combination thereof, each based on the total weight of the high heat copolycarbonate. The endcap content was determined using phosphorous nuclear magnetic resonance (³¹P-NMR) analysis.

The high heat copolycarbonates in some aspects can have a weight average molecular weight (Mw) of 15,000-80,000 Da, 10,000-50,000 Da, or 16,000-30,000 Da, as measured by gel permeation chromatography (GPC), using a crosslinked styrene-divinylbenzene column and calibrated to BPA homopolycarbonate references. GPC samples can be prepared at a concentration of 1 mg per ml and eluted at a flow rate of 1.5 ml per minute.

The high heat copolycarbonates can have sulfur present as a contaminant in the components used in the manufacture of the high heat copolycarbonates, i.e., the high heat aromatic dihydroxy monomer, the low heat aromatic dihydroxy monomer, endcapping agents, and the carbonate source, for example. The high heat copolycarbonates can have a sulfur content of up to 20 ppm, up to 15 ppm, up to 10 ppm, 0.1-20 ppm, 0.1-15 ppm, 0.1-10 ppm, 0.1-7 ppm, 0.5-20 ppm, 0.5-15 ppm, 0.5-10 ppm, 0.5-7 ppm, 1-20 ppm, 1-15 ppm, 1-10 ppm, 1-7 ppm, or 1-6 ppm, each based on the total weight of the high heat copolycarbonate.

The sulfur level of the high heat copolycarbonates can be measured by several methods. A commercially available Total Sulfur Analysis based on combustion and coulometric detection (fluorescence/chemiluminescence) can be used for samples that do not contain high levels of nitrogen. In the use of fluorescence/chemiluminescence detection of sulfur, interference of high concentrations of nitrogen concentrations becomes significant when analyzing sulfur at trace level. During combustion, the nitrogen present in the sample is converted into nitric oxide molecules (NO). During the absorption and excitation stage of the sulfur analyzer with UV-Fluorescence detection, NO-molecules interferes by emitting light at the same wavelength as SO2. Therefore, in samples with nitrogen content, it is advisable to use a different technique which is free of these interferences. In such cases, inductively coupled plasma mass spectrometry (ICP-MS) can be used. However, this technique can also be affected by interferences. For sulfur, the mass-to-charge ratios (m/z) of its main isotopes (32S+ and 34S+) overlap with polyatomic ions such as 1602+, (16OH)2+, 160180+, and 14N18O+, which can affect sensitivity and accuracy of the measurement (L.L. Yu, W.R. Kelly, J.D. Fassett, and R.D. Vocke, J. Anal. At. Spectrum. 16, 140-145 (2001)). However, this can be overcome by introducing O₂ in a pressurized reaction cell and monitoring SO+ rather than S+. Thus, the analytical signal is recorded in a m/z region with less intense interfering signals (R. Thomas, Spectroscopy 17, 42-48 (2002); D.R. Bandura, V.I. Baranov, and S.D. Tanner, Anal. Chem. 74, 1497-1502 (2002)). Lastly, a nitrogen-containing sample can be analyzed using a Triple Quadrupole ICP-MS (ICP-QQQ) which eliminates such interferences.

The polycarbonate compositions can further comprise a BPA homopolycarbonate. The polycarbonate compositions can comprise 10-100 wt%, or 20-80 wt%, or 40-70 wt%, or 85-99.8 wt% of the high heat copolycarbonate, each based on the total weight of the polycarbonate compositions. In some aspects, no BPA homopolycarbonate is present in the polycarbonate compositions. When a BPA homopolycarbonate is present, it can be, for example in an amount of 0.1-20 wt%, 0.1-15 wt%, 0.1-10 wt%, 0.1-5 wt%, 1-20 wt%, 1-15 wt%, 1-10 wt%, 1-5 wt%, 5-20 wt%, 5-15 wt%, 5-10 wt%, of a BPA homopolycarbonate, based on the total weight of the polycarbonate composition. The BPA homopolycarbonates can have sulfur present as a contaminant in the components used in the manufacture of the BPA homopolycarbonate, i.e., the BPA monomer, endcapping agents, and the carbonate source, for example. The BPA homopolycarbonates can have a sulfur content of up to 20 ppm, up to 15 ppm, up to 10 ppm, 0.1-20 ppm, 0.1-15 ppm, 0.1-10 ppm, 0.1-7 ppm, 0.5-20 ppm, 0.5-15 ppm, 0.5-10 ppm, 0.5-7 ppm, 1-20 ppm, 1-15 ppm, 1-10 ppm, 1-7 ppm, or 1-6 ppm, each based on the total weight of the BPA homopolycarbonate.

The BPA homopolycarbonates can comprise a phenolic endcap content of level less than or equal to less than 150 ppm, of less than or equal to 100 ppm, or less than or equal to 75 ppm, or less than or equal to 50 ppm; a carbamate endcap content of less than 15 ppm, or less than 10 ppm, or less than 5 ppm; or a combination thereof, each based on the total weight of the BPA homopolycarbonate. The phenolic endcap content and the carbamate endcap content was determined by phosphorous nuclear magnetic resonance analysis (³¹P-NMR).

When present, he BPA homopolycarbonate can be a linear BPA homopolycarbonate having an Mw of 10,000-100,000 Da, or 15,000-50,000 Da, or 17,000-35,000 Da, as measured by GPC, using a crosslinked styrene-divinylbenzene column and calibrated to BPA homopolycarbonate references. GPC samples can be prepared at a concentration of 1 mg per ml and eluted at a flow rate of 1.5 ml per minute. More than one BPA homopolycarbonate can be present. For example, the polycarbonate compositions can comprise a first BPA homopolycarbonate having an Mw of 20,000-25,000 Da and a second BPA homopolycarbonate having an Mw of 28,000-32,000 Da, or a second BPA homopolycarbonate having an Mw of 16,000-20,000 Da, each measured by GPC using BPA homopolycarbonate standards. The weight ratio of the first BPA homopolycarbonate relative to the second BPA homopolycarbonate can be 10:1-1:10, or 5:1-1: 5, or 3:1-1:3 or 2:1-1:2.

Advantageously, in contrast to the teachings of the prior art, the inventors have found that the aryl benzofuranone stabilizer of the polycarbonate compositions can reduce the yellowness that occurs initially and after aging. Indeed, yellowness after aging can be reduced in polycarbonate compositions even when sulfur is present as a contaminant in the components used in the manufacture of the high heat copolycarbonates and the homopolycarbonates, i.e., the high heat aromatic dihydroxy monomer, the low heat aromatic dihydroxy monomer, endcapping agents, and the carbonate source, for example. Further, the polycarbonate compositions having an aryl benzofuranone stabilizer can reduce the yellowness that occurs after aging for compositions when a sulfur-containing stabilizer or an organosulfonic stabilizer is present.

The polycarbonate compositions include an arylbenzofuranone stabilizer. The arylbenzofuranone stabilizer can have the formula 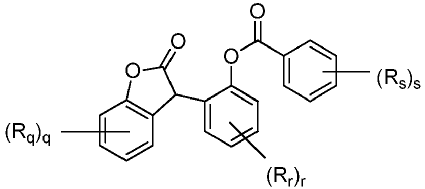 wherein R_{q}, Rᵣ, and Rₛ, are each independently C₁₋₁₂ alkyl, C₂₋₁₂ alkenyl, C₂₋₁₂ alkynyl, C₃₋₈ cycloalkyl, C₁₋₁₂ alkoxy, -OH, -SH, -NH₂, (C₁-C₄alkyl)amino, di(C₁-C₄alkyl)amino,-OP(=O)(ORₜ)₂, -OP(ORₜ)₂, -P(=O)(Rₜ)(ORₜ), -OP(=O)(Rₜ)₂, -P(=O)(Rₜ)₂, -P(Rₜ)₂, wherein each instance of Rₜ is independently C₁₋₁₂ alkyl, C₂₋₁₂ alkenyl, C₂₋₁₂ alkynyl, C₃₋₈ cycloalkyl; q, r, and s are each independently 0-4. In some aspects, a phosphorous-carbon bond, a phosphorous-oxygen bond, or a combination thereof is present.

In some aspects, the arylbenzofuranone stabilizer has the formula 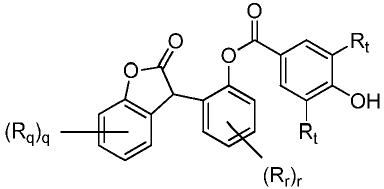 wherein R_{q}, Rᵣ, and Rₜ, are each independently C₁₋₁₂ alkyl, C₂₋₁₂ alkenyl, C₂₋₁₂ alkynyl, C₃₋₈ cycloalkyl, or C₁₋₁₂ alkoxy, each optionally substituted with halogen, -OH, -SH, -NH₂, (C₁-C₄alkyl)amino, di(C₁-C₄alkyl)amino; -OP(=O)(OR^{t})₂, -OP(OR^{t})₂, -P(=O)(R^{t})(OR^{t}), -OP(=O)( R^{t})₂, -P(=O)(R^{t})₂, -P(R^{t})₂, wherein each instance of R^{t} is independently C₁₋₁₂ alkyl, C₂₋₁₂ alkenyl, C₂₋₁₂ alkynyl, C₃₋₈ cycloalkyl; q and r are each independently 0-2. In some aspects a phosphorous-carbon bond, a phosphorous-oxygen bond, or a combination thereof is present.

The arylbenzofuranone stabilizer can be present from greater than 200 to 5000 ppm, from greater than 200 to 4500 ppm, from greater than 200 to 4000 ppm, from greater than 200 to 3500 ppm, from greater than 200 to less than 3000 ppm, greater than 200 to less than 2500 ppm, greater than 200 to less than 2000 ppm, greater than 200 to less than 1600 ppm, greater than 200 to less than 1200 ppm, greater than 200 to less than 1000 ppm, from 400 to 1600 ppm, from 400 to 1200 ppm, from 400 to 1000 ppm, or from 500 to 1000 ppm, each based on the total weight of the composition.

The polycarbonate compositions can further comprise a sulfur-containing stabilizer compound. In some aspects, the sulfur-containing stabilizer compound comprises a saturated or unsaturated C₆₋₄₀ hydrocarbon chain, or a saturated or unsaturated, branched or unbranched C₁₀₋₃₀ hydrocarbon chain. Unsaturated hydrocarbon chains can include 1 or more degrees of unsaturation (alkene or alkyne), for example 1, 2, 3, or 4 degrees of unsaturation. The hydrocarbon chain preferably is unbranched. Preferably the C₆₋₄₀ hydrocarbon chain or C₁₀₋₃₀ hydrocarbon chain is a linear alkyl group.

The sulfur-containing stabilizer compound can include a thioether carboxy compound of formula (3) 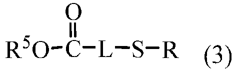 wherein L is a C₁₋₁₂ aliphatic or aromatic linking group; R is a C₁₋₄₀ alkyl, C₁₋₄₀ alkenyl, C₁₋₄₀ alkynyl, C₃₋₄₀ cycloalkyl, C₃₋₄₀ cycloalkenyl, C₆₋₄₀ aryl, C₇₋₄₀ arylalkylene, or C₇₋₄₀ alkylarylene; and R⁵ is a hydrogen, C₁₋₄₀ alkyl, C₆₋₄₀ aryl, C₇₋₄₀ alkylarylene, or C₇₋₄₀ arylalkylene. In an aspect, L is a C₁₋₆ aliphatic or C₆ aromatic linking group; R is a C₁₋₃₀ alkyl, C₁₋₃₀ alkenyl, C₁₋₃₀ alkynyl, C₆₋₃₀ aryl, C₇₋₃₀ arylalkylene, or C₇₋₁₄ alkylarylene, and R^{a} is hydrogen, C₁₋₃₀ alkyl, C₆₋₃₀ aryl, C₇₋₃₀ alkylarylene, or a C₇₋₃₀ arylalkylene. In a preferred aspect, L is a C₁₋₄ alkylene or C₆₋₁₂ arylene; R is C₁₋₃₀ alkyl; and R^{a} is C₁₋₃₀ alkyl.

In some aspects, the sulfur-containing stabilizer compound is of formula 3(a) 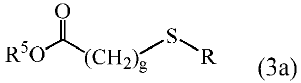 wherein R⁵ is a hydrogen, C₁₋₄₀ alkyl, C₁₋₄₀ alkenyl, C₁₋₄₀ alkynyl, C₃₋₄₀ cycloalkyl, C₃₋₄₀ cycloalkenyl, C₁₋₄₀ aryl, C₇₋₄₀ arylalkylene, or C₇₋₄₀ alkylarylene, and each g is independently the same or different and is 1-40, provided that R⁵ has 6-40 or 10-30 carbon atoms or g is 6-40 or 10-30. In an aspect, each R⁵ a C₆₋₄₀ alkyl, C₆₋₄₀ alkenyl, or C₆₋₄₀ alkynyl, and each g is independently the same or different and is 1-6. In a preferred aspect, R⁵ is a linear C₆₋₄₀ or C₁₀₋₃₀ alkyl group and g is 1-6, or 1, 2, or 4.

In other aspects, the sulfur-containing stabilizer compound can be a thioether dicarboxy compound formula (4) 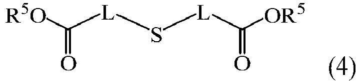 wherein each R⁵ is independently the same or different and is a hydrogen, C₁₋₄₀ alkyl, C₁₋₄₀ alkenyl, C₁₋₄₀ alkynyl, C₃₋₄₀ cycloalkyl, C₃₋₄₀ cycloalkenyl, C₁₋₄₀ aryl, C₇₋₄₀ arylalkylene, or C₇₋₄₀ alkylarylene; and each L is independently the same or different and is a C₁₋₁₂ aliphatic or aromatic linking group. In an aspect, each R⁵ is independently the same or different and is a C₁₋₃₀ alkyl, C₁₋₃₀ alkenyl, C₁₋₃₀ alkynyl, C₆₋₃₀ aryl, C₇₋₃₀ arylalkylene, or C₇₋₁₄ alkylarylene, and each L is independently the same or different and is a C₁₋₆ aliphatic or C₆ aromatic linking group.

In some aspects, at least one of the R⁵ groups of formula (4) is a saturated or unsaturated, branched or unbranched C₆₋₄₀ hydrocarbon chain, or a saturated or unsaturated, branched or unbranched C₁₀₋₃₀ hydrocarbon chain as described above. The hydrocarbon chain preferably is unbranched. Preferably at least one, or both, of the R⁵ groups of formula (4) is a linear C₆₋₄₀ or C₁₀₋₃₀ alkyl group. In this aspect the other of the R⁵ groups can be C₁₋₁₂ alkyl, C₁₋₁₂ alkenyl, C₁₋₁₂ alkynyl, C₆₋₁₂ aryl, C₇₋₁₃ arylalkylene, or C₇₋₁₃ alkylarylene. Alternatively in this aspect, the other of the R⁵ groups can be C₁₋₆ alkyl, C₁₋₆ alkenyl, C₆₋₁₂ aryl, C₇₋₁₃ arylalkylene, or C₇₋₁₃ alkylarylene.

The sulfur-containing stabilizer compound can be a thioether dicarboxy compound formula (4a) 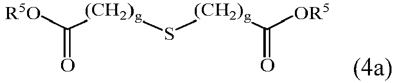 wherein each R⁵ is independently the same or different and is a hydrogen, C₁₋₄₀ alkyl, C₁₋₄₀ alkenyl, C₁₋₄₀ alkynyl, C₃₋₄₀ cycloalkyl, C₃₋₄₀ cycloalkenyl, C₁₋₄₀ aryl, C₇₋₄₀ arylalkylene, or C₇₋₄₀ alkylarylene, and each g is independently the same or different and is 1-40, provided that at least one R⁵ has 6-40 or 10-30 carbon atoms or at least one g is 6-40 or 10-30. In an aspect, each R⁵ is independently the same or different and is a C₆₋₄₀ alkyl, C₆₋₄₀ alkenyl, or C₆₋₄₀ alkynyl, and each g is independently the same or different and is 1-6. In a preferred aspect, each R⁵ is the same, and is a linear C₆₋₄₀ or C₁₀₋₃₀ alkyl group and each g is the same and is 1-6, or 1, 2, or 4. Preferred sulfur-containing stabilizers of this type include dilauryl thiodipropionate, dicetyl thiodipropionate, dimyristyl thiodipropionate, distearyl thiodipropionate, and ditridecyl thiodipropionate, or a combination thereof.

In a preferred aspect, the sulfur-containing stabilizer compound can be a thioether ester compound of formula (5) 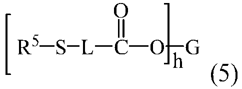 wherein each R⁵ is independently the same or different and is a hydrogen, C₁₋₄₀ alkyl, C₁₋₄₀ alkenyl, C₁₋₄₀ alkynyl, C₃₋₄₀ cycloalkyl, C₃₋₄₀ cycloalkenyl, C₁₋₄₀ aryl, C₇₋₄₀ arylalkylene, or C₇₋₄₀ alkylarylene; and each L is independently the same or different and is a C₁₋₁₂ aliphatic or aromatic linking group. In an aspect, each R⁵ is independently the same or different and is a C₁₋₃₀ alkyl, C₁₋₃₀ alkenyl, C₁₋₃₀ alkynyl, C₆₋₃₀ aryl, C₇₋₃₀ arylalkylene, or C₇₋₁₄ alkylarylene, and each L is independently the same or different and is a C₁₋₆ aliphatic or a C₆ aromatic linking group.

In some aspects, at least one of the R⁵ groups of formula (5) is a saturated or unsaturated, branched or unbranched C₆₋₄₀ hydrocarbon chain, or a saturated or unsaturated, branched or unbranched C₁₀₋₃₀ hydrocarbon chain as described above. The hydrocarbon chain preferably is unbranched. Preferably at least one, or all, of the R⁵ groups of formula (5) is a linear C₆₋₄₀ or C₁₀₋₃₀ alkyl group. In this aspect the other of the R⁵ groups can be C₁₋₁₂ alkyl, C₁₋₁₂ alkenyl, C₁₋₁₂ alkynyl, C₆₋₁₂ aryl, C₇₋₁₃ arylalkylene, or C₇₋₁₃ alkylarylene. Alternatively in this aspect, the other of the R⁵ groups can be C₁₋₆ alkyl, C₁₋₆ alkenyl, C₆₋₁₂ aryl, C₇₋₁₃ arylalkylene, or C₇₋₁₃ alkylarylene.

In another aspect, the sulfur-containing stabilizer compound can be a thioether ester compound of formula (5a) 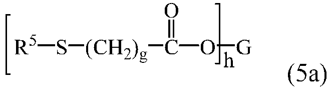 wherein each R⁵ is independently the same or different and is a C₁₋₄₀ alkyl, C₁₋₄₀ alkenyl, C₁₋₄₀ alkynyl, C₃₋₄₀ cycloalkyl, C₃₋₄₀ cycloalkenyl, C₁₋₄₀ aryl, C₇₋₄₀ arylalkylene, or C₇₋₄₀ alkylarylene, G is a C₂₋₂₀ hydrocarbyl having a valence h, g is 1-40, and h is 2-6, provided that at least one R⁵ has 5-40 or 10-30 carbon atoms or at least one g is 5-40 or 10-30. In an aspect, each R⁵ is a C₅₋₄₀ alkyl, C₅₋₄₀ alkenyl, or C₅₋₄₀ alkynyl, G is a C₂₋₈ alkyl having a valence h, g is 1-6, or 1, 2, or 4 and h is 2-6. In a preferred aspect, each R⁵ is independently the same or different linear C₅₋₄₀ or C₁₀₋₃₀ alkyl group, G is a C₂₋₈ alkyl having a valence h, each g is the same and is 1-6, or 1-4, and h is 2-4. Preferred sulfur-containing stabilizers of this type include 2,2-bis[[3-(dodecylthio)-1-oxopropoxy]methyl]propane-1,3-diyl bis[3-(dodecylthio)propionate of formula (5b).

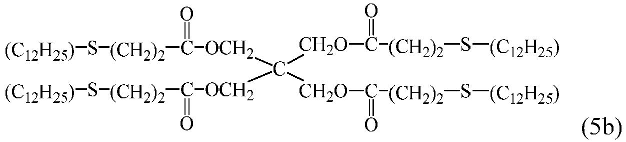

The sulfur-containing stabilizer compound can be present from 5-100 ppm, 10-100 ppm, 5-75 ppm, 5-50 ppm, 5-40 ppm, or 5-10 ppm, or 20-100 ppm, or 40-100 ppm, based on the total weight of the polycarbonate composition. In some aspects, sulfur-containing stabilizer compound can be present in an amount effective to provide 2-50 ppm, 2-40 ppm, 2-10 ppm, 5-50 ppm, 5-40 ppm, or 5-10 ppm of added sulfur, the i.e., sulfur-containing stabilizer-added sulfur, each based on the total weight of the polycarbonate composition. As stated above, "added sulfur" (here, "sulfur-containing stabilizer-added sulfur") refers to sulfur added to the polycarbonate composition from the sulfur-containing stabilizer, and does not include any contaminant sulfur present in the high heat aromatic dihydroxy monomer, the low heat aromatic dihydroxy monomer, the endcapping agents, or the carbonate source used in manufacture of the high heat copolycarbonates. In an aspect, the sulfur-containing stabilizer compound can be absent.

In a preferred aspect, the sulfur-containing stabilizer compound is soluble in an organic solvent that also dissolves the high heat copolycarbonate, and has low solubility in an aqueous solvent at a pH of less than 11. These characteristics allow the sulfur-containing stabilizer compound to be added before, during, or after manufacture of the high heat copolycarbonate, and remain with the high heat copolycarbonate compositions in the organic phase during the separation of the brine phase or the extraction of the organic phase with an acidic aqueous phase or a neutral pH aqueous phase. In an aspect, the sulfur-containing stabilizer compound can have a solubility of 5 g in 20 mL of an organic phase solvent. The organic solvent is selected to dissolve the high heat copolycarbonate and can be a halogenated solvent such as methylene chloride, chlorobenzene, dichlorobenzene, or a combination thereof. Conversely, the sulfur-containing stabilizer can have a solubility of less than 0.5 mg in 10 mL of water or brine, each at a pH of less than 11, or less than 7. In an aspect, the sulfur-containing stabilizer compound can have a solubility of less than 100 ppm, or more preferably less than 50 ppm in the water or a brine phase.

Accordingly, he sulfur-containing stabilizer compound can be added with the monomers (in the formulation tank), supplied in the monomer composition (provided by the supplier, for example), or pumped directly to the reactor before, during, or after the polymerization reaction. The sulfur-stabilizer compound can be added to a centrifuge feed tank, concentrator, or precipitation feed, or feed tank. The sulfur-containing stabilizer compound can be added as a solid, solution, or molten.

The sulfur-containing stabilizer compound in some aspects improves the color stability of the composition after the composition is molded under aggressive conditions, e.g., at high melt temperatures, such as 350°C or higher, or prolonged residence times during molding, such as times exceeding 7.5 or 10 minutes, or both. In some aspects it is possible to simultaneously improve the initial color of the polycarbonate composition and the color stability of the composition after the composition is molded under aggressive conditions, typically at high melt temperatures, such as 350°C or higher, or prolonged residence times during molding, such as times exceeding 7.5 or 10 minutes, or both. However, in the absence of an aryl benzofuranone stabilizer, the color stability can deteriorate on aging.

In some aspects, the polycarbonate compositions can further include a sulfonic acid stabilizer also referred to herein as an "organosulfonic stabilizer". The organosulfonic stabilizer can be an aryl or aliphatic sulfonic acid, including a polymer thereof, an aryl or an aliphatic sulfonic acid anhydride, or an aryl or aliphatic ester of an aryl or aliphatic sulfonic acid, or a polymer thereof. In particular, the organosulfonic stabilizer is a C₁₋₃₀ alkyl sulfonic acid, a C₆₋₃₀ aryl sulfonic acid, a C₇₋₃₀ alkylarylene sulfonic acid, a C₇₋₃₀ arylalkylene sulfonic acid, or an aromatic sulfonic acid polymer; an anhydride of a C₁₋₃₀ alkyl sulfonic acid, a C₆₋₃₀ aryl sulfonic acid, a C₇₋₃₀ alkylarylene sulfonic acid, or a C₇₋₃₀ arylalkylene sulfonic acid; or a C₆₋₃₀ aryl ester of: a C₁₋₃₀ alkyl sulfonic acid, a C₆₋₃₀ aryl sulfonic acid, a C₇₋₃₀ alkylarylene sulfonic acid, a C₇₋₃₀ arylalkylene sulfonic acid, or an aromatic sulfonic acid polymer; or a C₁₋₃₀ aliphatic ester of: a C₁₋₃₀ alkyl sulfonic acid, a C₆₋₃₀ aryl sulfonic acid, a C₇₋₃₀ alkylarylene sulfonic acid, a C₇₋₃₀ arylalkylene sulfonic acid, or an aromatic sulfonic acid polymer. A combination of one or more of the foregoing can be used.

In an aspect, the organosulfonic stabilizer is of formula (6).

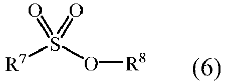

In formula (6), R⁷ is each independently a C₁₋₃₀ alkyl, C₆₋₃₀ aryl, C₇₋₃₀ alkylarylene, C₇₋₃₀ arylalkylene, or a polymer unit derived from a C₂₋₃₂ ethylenically unsaturated aromatic sulfonic acid or its corresponding C₁₋₃₂ alkyl ester. The C₂₋₃₂ ethylenically unsaturated aromatic sulfonic acid can be of the formula 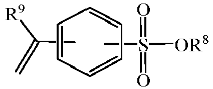 wherein R⁹ is hydrogen or methyl and R⁸ is as defined in formula (6). Preferably the ethylenically unsaturated group and the sulfonic acid or ester group are located para on the phenyl ring.

Further in formula (6), R⁸ is hydrogen; or R⁸ is C₁₋₃₀ alkyl; or R⁸ is a group of the formula -S(=O)₂-R⁷. When R⁸ is a group of the formula -S(=O)₂-R⁷, each R⁷ in the compound of formula (6) can be the same or different, but preferably each R⁷ is the same.

In an aspect in formula (6), R⁷ is a C₆₋₁₂ aryl, C₇₋₂₄ alkylarylene, or a polymer unit derived from a C₂₋₁₄ ethylenically unsaturated aromatic sulfonic acid or its ester; and R⁸ is hydrogen, C₁₋₂₄ alkyl, or a group of the formula -S(=O)₂-R⁷ wherein R⁷ is a C₆₋₁₂ aryl or C₇₋₂₄ alkylarylene. In another aspect in formula (6), R⁷ is a C₇₋₁₀ alkylarylene or a polymer unit derived from a C₂₋₁₄ ethylenically unsaturated aromatic sulfonic acid, and R⁸ is a hydrogen, C₁₋₂₅ alkyl, or a group of the formula -S(=O)₂-R⁷ wherein R⁷ is a C₇₋₁₀ alkylarylene. In still another aspect, R⁷ is a C₇₋₁₀ alkylarylene and R⁸ is a hydrogen or C₁₋₆ alkyl. In still another aspect, R⁷ is a C₇₋₁₀ alkylarylene and R⁸ is a hydrogen or C₁₂₋₂₅ alkyl, or R⁸ is a C₁₄₋₂₀ alkyl. In another aspect, R⁷ is a polymer unit derived from a C₂₋₁₄ ethylenically unsaturated aromatic sulfonic acid, preferably p-styrene sulfonic acid or para-methyl styrene sulfonic acid, such that in formula (6) R⁸ is hydrogen.

The organosulfonic stabilizer can be a C₁₋₁₀ alkyl ester of a C₇₋₁₂ alkylarylene sulfonic acid, preferably of p-toluene sulfonic acid. More preferably the stabilizer is a C₁₋₆ alkyl ester of p-toluene sulfonic acid, such as butyl tosylate. In another aspect, the organosulfonic stabilizer is an anhydride of a C₇₋₁₂ alkylarylene sulfonic acid, preferably para-toluene sulfonic anhydride. In still another aspect, R⁷ is a C₁₁₋₂₄ alkylarylene sulfonic acid, and R⁸ is hydrogen. Alternatively, R⁷ is a C₁₆₋₂₂ alkylarylene sulfonic acid, and R⁸ is hydrogen.

In an aspect, the sulfonic acid stabilizer is absent. When present, the organosulfonic stabilizer is present from 2-40 ppm, or 2-20 ppm, or 4-15 ppm, or 4-10 ppm, or 4-8 ppm, each based on the total weight of the polycarbonate composition. In some aspects, the organosulfonic acid stabilizer is present in an amount effective to provide 0.1-6 ppm, 0.1-3 ppm, 0.1-2 ppm, 0.1-1.5 ppm, 0.1-1.25 ppm, 0.25-6.0 ppm, or 0.25-3.0 ppm, 0.25-2.0 ppm, or 0.25-1.5 ppm, 0.25-1.25 ppm, or 0.5-6.0, 0.5-3.0 ppm, 0.5-2.0 ppm, 0.5-1.5 ppm, or 0.5-1.25 ppm of added sulfur i.e., organosulfonic stabilizer-added sulfur, each based on the total weight of the polycarbonate composition.

In addition to the sulfur-containing stabilizer compound, in some aspects, a sulfur-containing agent can be present during manufacture of the high heat copolycarbonate, in particular those including C₆₋₁₄ alkyl substituents. In some aspects the sulfur-containing agent can provide improved mold release properties. The sulfur-containing agent can be of formula (A) 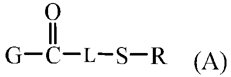 wherein G is leaving group, L is a C₁₋₁₂ aliphatic or aromatic linking group, and R is a C₁₋₂₀ alkyl, C₆₋₁₈ aryl, or C₇₋₂₄ alkylarylene, preferably a C₁₋₁₄ alkyl, C₆₋₁₂ aryl, or a C₇₋₁₃ arylalkylene. Preferably R is a C₆₋₁₄ alkyl. For example, G can be a halide, a hydroxy group (-OH), or a salt of a hydroxy group. For example, the salt can be an alkali metal or alkaline-earth metal salt, an ammonium salt, or the like. In another aspect, G of formula (A) can be of the formula -OR^{a} and the sulfur-containing agent can be of formula (A1) 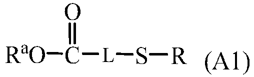 wherein R^{a} is a C₁₋₃ alkyl, C₆₋₁₈ aryl, C₇₋₂₄ alkylarylene, or C₇₋₂₄ arylalkylene, and L and R are defined in formula (A). Preferably R^{a} is C₁₋₃ alkyl, and R is a C₆₋₁₄ alkyl.

The sulfur-containing agent can be of formula (A2), (A3), or a combination thereof 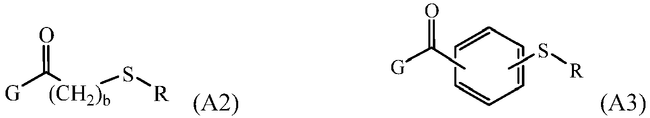 wherein R is a C₁₋₂₀ alkyl, C₆₋₁₈ aryl, or C₇₋₂₄ arylalkylene, preferably a C₁₋₁₄ alkyl, C₆₋₁₂ aryl, or a C₇₋₁₃ arylalkylene, b is 1-5, preferably 1-2, and G is as defined in formula (A). In an aspect R is C₆₋₁₄ alkyl, b is 1-5, preferably 1-2, and G is hydrogen or R^{a} as defined in formula A1, preferably C₁₋₃ alkyl.

For example, the sulfur-containing agent can be of formulas (B1) to (B5) 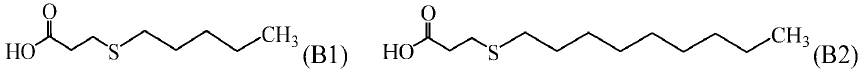 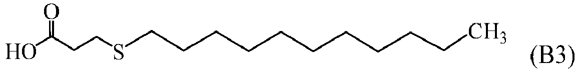 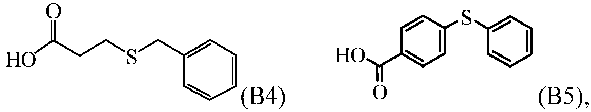 or a combination thereof.

More than one sulfur-containing agent can be used, such as 2, 3, or 4 or more different sulfur-containing agents. When the sulfur-containing agent is used, the high heat copolycarbonate further comprises thioether carbonyl functional groups (e.g., pendant groups, end groups, or a combination thereof) of the formula -C(=O)-L-S-R, wherein L is a C₁₋₁₂ aliphatic or aromatic linking group and R is a C₁₋₂₀ alkyl, C₆₋₁₈ aryl, or C₇₋₂₄ arylalkylene. The thioether carbonyl functional groups can be of the formula 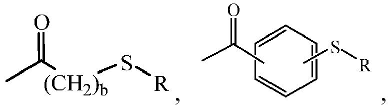 or a combination thereof, wherein R is a C₁₋₂₀ alkyl, C₆₋₁₈ aryl, or C₇₋₂₄ arylalkylene, preferably a C₁₋₁₄ alkyl, C₆₋₁₂ aryl, or a C₇₋₁₃ arylalkylene, and b is 1-5, preferably 1-2. In a preferred aspect, the thioether carbonyl functional groups are incorporated as endgroups.

In another preferred aspect, the thioether carbonyl functional groups are of the formula 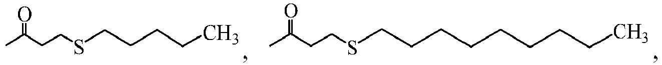 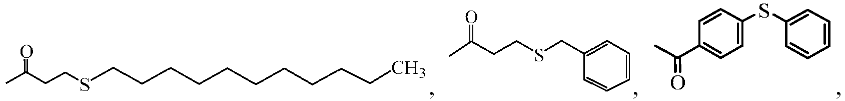 or a combination thereof.

When the thioether carbonyl functional groups are present, the amount of the sulfur-containing agent used can be an amount effective for the thioether carbonyl functional groups to provide 5-70 ppm, preferably 5-50 ppm, more preferably 10-50 ppm of added sulfur, i.e., thioether carbonyl functional group-added sulfur, in the high heat copolycarbonates, each based on the total parts by weight of the high heat copolycarbonate.

The polycarbonate compositions can further include a BPA homopolycarbonate. The BPA homopolycarbonate can be linear and have an Mw of 10,000-100,000 Da, or 15,000-50,000 Da, or 17,000-35,000 Da, as measured by GPC, using a crosslinked styrene-divinylbenzene column and calibrated to BPA homopolycarbonate references. GPC samples can be prepared at a concentration of 1 mg per ml and eluted at a flow rate of 1.5 ml per minute. More than one BPA homopolycarbonate can be present. For example, the polycarbonate compositions can comprise a first BPA homopolycarbonate having an Mw of 20,000-25,000 Da and a second BPA homopolycarbonate having an Mw of 28,000-32,000 Da, or a second BPA homopolycarbonate having an Mw of 16,000-20,000 Da, each measured by GPC using BPA homopolycarbonate standards. The weight ratio of the first BPA homopolycarbonate relative to the second BPA homopolycarbonate can be 10:1-1:10, or 5:1-1: 5, or 3:1-1:3 or 2:1-1:2.

The polycarbonate compositions can include various other additives ordinarily incorporated into polycarbonate compositions, with the proviso that the additive(s) are selected so as to not significantly adversely affect the desired properties of the polycarbonate composition, in particular melt flow, optical clarity, and thermal properties. Such additives can be mixed at a suitable time during the mixing of the components for forming the composition. Additives include antioxidants, heat stabilizers, light stabilizers, ultraviolet (UV) light stabilizers, plasticizers, lubricants, mold release agents, antistatic agents, colorants such as organic dyes, surface effect additives, radiation stabilizers, flame retardants, anti-drip agents, and impact modifiers. In an aspect, the polycarbonate composition further comprises a processing aid, an antioxidant or a heat stabilizer, an ultraviolet light absorber, a colorant, a flame retardant, an impact modifier, or a combination thereof. A combination of additives can be used, for example a combination of a heat stabilizer, mold release agent, and ultraviolet light stabilizer. In general, the additives are used in the amounts generally known to be effective. For example, the total amount of the additives (other than any impact modifier, filler, or reinforcing agents) can be 0-5 wt% or 0.01-5 wt%, based on the total weight of the polycarbonate composition, excluding any filler.

Antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or a combination thereof. Antioxidants are generally used in amounts ranging from 400-800 parts per million (ppm).

Colorants such as pigment or dye additives can also be present. Useful pigments can include, for example, inorganic pigments such as metal oxides and mixed metal oxides such as zinc oxide, titanium dioxides, iron oxides, or the like; sulfides such as zinc sulfides, or the like; aluminates; sodium sulfo-silicates sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 179, Pigment Red 202, Pigment Violet 29, Pigment Blue 15, Pigment Blue 60, Pigment Green 7, Pigment Yellow 119, Pigment Yellow 147, Pigment Yellow 150, and Pigment Brown 24; or a combination thereof.

In some aspects, the polycarbonate composition includes a colorant comprising Solvent Green 3, Solvent Green 28, Solvent Green 38, Pigment Green 50, Pigment Green 36, Solvent Red 52, Solvent Red 101, Solvent Red 111, Solvent Red 135, Solvent Red 169, Solvent Red 179, Solvent Red 207, Pigment Red 101, Disperse Red 22, VatRed 41, Solvent Orange 60, Solvent Orange 63, Disperse Orange 47, Solvent Violet 13, Solvent Violet 14, Solvent Violet 36, Solvent Violet 50, Disperse Violet 26/31, Pigment Blue 29, Pigment Blue 60, Copper phthalocyanine Pigment Blue 15.4, Disperse Blue 73, Solvent Blue 97, Solvent Blue 101, Solvent Blue 104, Solvent Blue 122, Solvent Blue 138, Pigment Yellow 53, Pigment Yellow 138, Pigment Yellow 139, Disperse Yellow 201, Solvent Yellow 33, Solvent Yellow 114, Solvent Yellow 93, Solvent Yellow 98, Solvent Yellow 163, Solvent Yellow 160:1, Solvent Yellow 188, or a combination thereof; preferably Solvent Red 52, Solvent Red 135, or a combination thereof. In some aspects, no colorant is preferred.

The polycarbonate compositions can be manufactured by various methods known in the art. For example, powdered copolycarbonate, and other optional components are first blended, optionally with any fillers, in a high-speed mixer or by hand mixing. The blend is then fed into the throat of a twin-screw extruder via a hopper. Alternatively, at least one of the components can be incorporated into the composition by feeding it directly into the extruder at the throat or downstream through a sidestuffer, or by being compounded into a masterbatch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

A molded sample of the composition having a thickness of 3.2 millimeters and aged for 250 hours at 150 °C can have a change in a yellowness index value of less than 6.0, or less than 5.0, or less than 3.0 as compared with an initial yellowness index value of the molded sample, as measured in accordance with ASTM D1925.

The thermoplastic compositions can be used in articles including a molded article, a thermoformed article, an extruded film, an extruded sheet, one or more layers of a multi-layer article, a substrate for a coated article, or a substrate for a metallized article. Optionally, the article has no significant part distortion or discoloration when the article is subjected to a secondary operation such as over-molding, lead-free soldering, wave soldering, low temperature soldering, or coating, or a combination thereof. The articles can be partially or completely coated with, e.g., a hard coat, a UV protective coat, an anti-refractive coat, an anti-reflective coat, a scratch resistant coat, or a combination thereof, or metallized.

Exemplary articles include a lens, a light guide, a waveguide, a collimator, an optical fiber, a window, a door, a visor, a display screen, an electronic device, a scientific or medical device, an autoclavable article, a safety shield, a fire shield, wire or cable sheathing, a mold, a dish, a tray, a screen, an enclosure, glazing, packaging, a gas barrier, an anti-fog layer, or an anti-reflective layer.

This disclosure is further illustrated by the following examples, which are nonlimiting.

### EXAMPLES

The following components shown in table 1 are used in the examples. Unless specifically indicated otherwise, the amount of each component is in weight percent (wt%), based on the total weight of the composition. Examples of the invention are designated by numbers, comparative example by letters.

**Table 1**

| Component | Description | Source |
|---|---|---|
| BPI-BPA-1 | Copolycarbonate of bisphenol A (BPA) (20 mol%) and bisphenol isophorone (4,4'-(3,3,5-trimethylcyclohexane-1,1-diyl)diphenol or "BPI") (80 mol% ), p-cumylphenol (PCP) endcaps, Tg = 218 °C. Mw = 23,000 Da using PC Standards PC | SABIC |
| BPI-BPA-2 | Neutral tinted Copolycarbonate of bisphenol A (BPA) (43 mol%) and bisphenol isophorone (4,4'-(3,3,5-trimethylcyclohexane-1,1-diyl)diphenol or "BPI") (57 mol%), p-tert-butylphenol endcaps. Tg = 205°C, Mw = 28,100 Da, BPA/BPI free hydroxyl endgroups = 70 ppm; available as APEC 2097-551022 | COVESTRO |
| PPP-BPI-BPA | Copolycarbonate terpolymer of PPPBP (15.5 mol%), BPI (55 mol%), and BPA (28.5 mol%), PCP endcaps. Tg = 220 °C. Mw = 21700 Da using PC Standards PC | SABIC |
| PPP-BPI | Copolycarbonate copolymer of PPPBP (45 mol%) and BPA (55 mol%), PCP endcaps, Tg = 213 °C. Mw = 22900 Da using PC Standards PC | SABIC |
| PC1 | Linear poly(bisphenol A carbonate), PCP endcaps, Mw = 22,000 Da per GPC using bisphenol A homopolycarbonate standards, Tg = 149 °C; BPA free hydroxyl end groups = 44 ppm. | SABIC |
| Stab-1 | 4-tert-butyl-2-(5-tert-butyl-2-oxo-3H-benzofuran-3-yl)phenyl-3,5-di-tert-butyl-4-hydroxybenzoate, available as REVONOX 501 CAS number 1261240-30-5, C₃₇H₄₆O₅ Mw = 570.8 Da | CHITEC Technology |
| Stab-2 | 2,2-Bis[[3-(dodecylthio)-1-oxopropoxy]methyl]propane-1,3-diyl bis[3-(dodecylthio)propionate], available as SEENOX 4125. Chemical formula C₆₅H₁₂₄,O₆S₄, Mw = 1129.9. Da, and 11.3 wt% sulfur | Chemtura Corporation or Addivant USA |
| Stab-3 | Butyl tosylate, C₁₁H₁₆O₃S. Mw = 228.31, 32.1 wt% sulfur | Sigma-Aldrich |
| Stab-4 | 5,7-Di-tert-butyl-3-(3,4-dimethylphenyl)benzofuran-2(3H)-one. Mw = 350.49 Da; C₂₄H₃₀O₂.CAS# 164391-52-0 | Sigma-Aldrich |
| AO | Tris(2,4-di-tert-butylphenyl) phosphite, available as IRGAFOS 168 C₄₂H₆₃O₃P Mw = 646.9 Da, 4.8% phosphorous | BASF |

All polycarbonate compositions except where indicated are compounded on a Werner & Pfleiderer co-rotating twin screw extruder (Length/Diameter (L/D) ratio = 30/1, vacuum port located near die face). The twin-screw extruder had enough distributive and dispersive mixing elements to produce good mixing between the polymer compositions. The compositions are subsequently molded according to ISO 294 on a Husky or BOY injection-molding machine. Compositions are compounded and molded at a temperature of 285-330 °C, though it will be recognized by one skilled in the art that the method cannot be limited to these temperatures.

Physical measurements were made using the tests and test methods described below. The testing samples were prepared as described below and the following test methods were used.

Yellowness Index (YI) before and after aging for 250 hours at 150 °C in air was measured on 3.2 millimeter samples in accordance with ASTM D1925.

Polymer molecular weights [weight average (Mw)] were determined using gel permeation chromatography (GPC) as per ASTM method D5296-97. Polycarbonate standards were used for calibration, methylene chloride was used as the solvent.

Glass transition temperatures were measured using differential scanning calorimetry (DSC) was run as per ASTM method D3418-03, but using a 20 °C/min heating rate and recorded on the second heat.

Polydispersivity Index (PDI) was calculated as the ratio of weight average (Mw) and number average (Mn) molecular weights.

Phosphorus 31 nuclear magnetic resonance (³¹P NMR) analysis, using phosphorous functionalization of the polycarbonate phenolic end groups, was used to characterize the resins. A sample was dissolved in CDCl₃ with pyridine and chromium (III) AcAc (acetylacetonate); trichloro phenol was used as a standard. The active phosphorylating agent, which derivatized the phenolic end group functionality into phosphorous containing species, was o-phenylene, phosphorochloridite (CAS#1641-40-3). The resin solutions were allowed to react for at least 15 minutes, converted into their phosphorus derivatives and analyzed by NMR. Phosphorus 31 isotope signals were observed and quantified vs. the trichloro phenol standard. The phenolic end group chemical shifts were from 124 to 127 ppm for BPA or BPI units. None of the resins have more than 10 ppm carbamate end groups.

Table 2 shows the compositions and properties for Comparative Examples A-D and Examples 1-6.

**Table 2.**

| Component | Unit | A | B | C | D | 1 | 2 | 3 | 4 | 5 | 6 |
|---|---|---|---|---|---|---|---|---|---|---|---|
| BPI-BPA-2 | wt% | 90 | 90 | 90 | 90 | 90 | 90 | 90 | 90 | 90 | 90 |
| PC1 | wt% | 10 | 10 | 10 | 10 | 10 | 10 | 10 | 10 | 10 | 10 |
| Stab-1 | ppm | 0 | 0 | 0 | 0 | 800 | 1600 | 800 | 800 | 1600 | 1600 |
| Stab-2* | ppm | 0 | 0 | 45 | 90 | 0 | 0 | 45 | 90 | 45 | 90 |
| AO | ppm | 0 | 600 | 600 | 600 | 600 | 600 | 600 | 600 | 600 | 600 |

| Properties | | | | | | | | | | | |
|---|---|---|---|---|---|---|---|---|---|---|---|
| Mw | Da | 26975 | 27235 | 26607 | 26457 | 27302 | 27389 | 27041 | 27030 | 27064 | 27396 |
| DSC, Tg | C | | 198 | | 193 | | 196 | | | | 196 |
| BPA/BPI free hydroxyl endgroups | ppm | 105 | 109 | 115 | 119 | 105 | 106 | 101 | 105 | 104 | 108 |
| YI, 0 h | | 0.82 | 0.72 | 0.47 | 0.41 | 0.51 | 0.80 | 0.50 | 0.70 | 0.94 | 0.78 |
| ΔYI, 250 h | | 4.2 | 4.5 | 6.2 | 8.5 | 1.5 | 2.0 | 1.6 | 1.8 | 1.8 | 2.0 |

| | | | | | | | | | | | |
|---|---|---|---|---|---|---|---|---|---|---|---|
| *45 & 90 ppm Seenox 412S are amounts effective to provide 5 & 10 ppm sulfur, respectively. | | | | | | | | | | | |

Table 2 shows the effect of the presence of aryl benzofuranone (Stab-1) and sulfur-containing stabilizer compound (Stab-2) on the YI values for mixtures of BPI-BPA copolymer (BPI-BPA-2) and bisphenol A homopolycarbonate (PC1). Added sulfur-containing stabilizer compound (Stab-2) can provide a small but measurable improvement in initial YI compared with compositions wherein Stab-2 is absent (compare Comparative Examples A and B with Comparative Examples C and D). In addition, Comparative Examples A and B. wherein both the aryl benzofuranone (Stab-1) and Stab-2 were absent resulted in a significant increase in YI (i.e., from 0.82-4.2 and 0.72-4.5, respectively) after heat aging. However, Comparative Examples C and D, wherein Stab-2 was present, but Stab-1 was absent, showed an even larger increase in YI on aging (compare Comparative Examples C and D with Comparative Examples A and B).

Examples 1 and 2, wherein aryl benzofuranone (Stab-1) was present (800 and 1600 ppm, respectively) and sulfur-containing stabilizer compound (Stab-2) was absent, showed a dramatic decrease in delta YI on heat aging as compared with Comparative Examples A and B. Examples 3-6 having a combination of Stab-1 and Stab-2 demonstrate a reduction in both the initial YI and the delta YI on heat aging. This is an advantage, at least because it is costly and commercially impractical to completely remove all the sulfur impurities from the various bisphenol monomers used in the synthesis of the polycarbonates. Thus, the use of an aryl benzofuranone (Stab-1) allows for the use of monomers containing sulfur impurities while achieving improved long-term color stability, in particular greatly reduced color shift on aging.

Table 3 shows the compositions and properties for Comparative Examples E-J and Examples 7-10.

**Table 3.**

| Component | Unit | E | F | G | H | I | J | 7 | 8 | 9 | 10 |
|---|---|---|---|---|---|---|---|---|---|---|---|
| BPI-BPA-1 | wt% | 99.94 | 99.94 | 99.94 | 99.94 | 99.94 | 99.94 | 99.94 | 99.94 | 99.94 | 99.94 |
| Stab-1 | ppm | 0 | 0 | 0 | 0 | 0 | 0 | 800 | 800 | 400 | 800 |
| Stab-2* | ppm | 0 | 0 | 0 | 0 | 0 | 0 | 0 | 0 | 45 | 45 |
| Stab-3 (BuTs) | ppm | 0 | 12 | 0 | 12 | 0 | 12 | 12 | 12 | 12 | 12 |
| AO | ppm | 600 | 600 | 600 | 600 | 600 | 600 | 600 | 600 | 600 | 600 |
| Sulfur content in BPI-BPA | ppm | 1.02 | 1.02 | 2.0 | 2.0 | 5.7 | 5.7 | 2.0 | 5.7 | 2.0 | 5.7 |

| Properties | | | | | | | | | | | |
|---|---|---|---|---|---|---|---|---|---|---|---|
| Mw | Da | 24046 | 24057 | 24163 | 24252 | 21143 | 21183 | 24497 | 21375 | 24489 | 21437 |
| DSC, Tg | °C | 220 | 221 | 220 | 221 | 216 | 216 | 220 | 216 | 220 | 215 |
| YI, 0 h | | 2.8 | 2.8 | 2.9 | 3.0 | 3.0 | 2.7 | 3.5 | 3.2 | 3.3 | 3.3 |
| ΔYI, 250 h | | 3.4 | 5.4 | 3.7 | 5.6 | 5.6 | 6.7 | 4.5 | 4.8 | 4.0 | 4.6 |

| | | | | | | | | | | | |
|---|---|---|---|---|---|---|---|---|---|---|---|
| *45 ppm Seenox 412S is an amount effective to provide 5 ppm sulfur. | | | | | | | | | | | |

Table 3 shows the effect of the presence of aryl benzofuranone (Stab-1) and/or sulfur-containing stabilizer compound (Stab-2) and/or an organosulfonic acid stabilizer (Stab-3) on the YI values for compositions including a BPI-BPA copolymer (BPI-BPA-1), wherein BPI-BPA-1 has variable sulfur content. In compositions wherein BPI-BPA-1 contains 1.02 ppm sulfur, the addition of organosulfonic acid stabilizer butyl tosylate (Stab-3) resulted in no improvement in initial YI values (Comparative Examples E and F). Example 7, wherein the BPI-BPA had 2.0 ppm sulfur content and Stab-1 (800 ppm) and organosulfonic acid stabilizer butyl tosylate (Stab-3, 12 ppm) were both present showed an increase in the initial YI and an improved ΔYI after aging compared to Comparative Example H (4.5 versus 5.6, respectively). Incorporating sulfur-containing stabilizer compound (Stab-2) and decreasing the loading of Stab-1 to 400 ppm in a composition wherein BPI-BPA had 2.0 ppm sulfur content, resulted in a similar initial YI and an improved ΔYI (compare Example 9 with Example 8). Incorporating sulfur-containing stabilizer compound (Stab-2) and Stab-1 (800 ppm loading) in a composition wherein BPI-BPA had a higher sulfur content (5.7 ppm), resulted in an increase initial YI and an improved ΔYI (compare Example 10 with Comparative Example J).

Table 4 shows the compositions and properties for Comparative Example K and Examples 11-15.

**Table 4.**

| Component | Unit | K | 11 | 12 | 13 | 14 |
|---|---|---|---|---|---|---|
| BPI-BPA-1 | wt% | 99.94 | 99.94 | 99.94 | 99.94 | 99.94 |
| Stab-1 | ppm | 0 | 200 | 400 | 800 | 3000 |
| Stab-2* | ppm | 45 | 45 | 45 | 45 | 45 |
| Stab-3 (BuTs) | ppm | 12 | 12 | 12 | 12 | 12 |
| AO | ppm | 600 | 600 | 600 | 600 | 600 |

| Properties | | | | | | |
|---|---|---|---|---|---|---|
| Sulfur in BPI-BPA | ppm | 2.0 | 2.0 | 2.0 | 2.0 | 2.0 |
| YI, 0 h | | 3.1 | 3.3 | 3.3 | 3.5 | 3.6 |
| ΔYI, 250 h | | 10.3 | 10.3 | 4.0 | 4.5 | 9.2 |

| | | | | | | |
|---|---|---|---|---|---|---|
| *45 ppm Seenox 412S is an amount effective to provide 5 ppm sulfur. | | | | | | |

Table 4 shows the effect of the loading amount of arylbenzofuranone (Stab-1) on compositions that include BPI-BPA-1 having 2 ppm sulfur content, and a combination of sulfur-containing stabilizer compound and an organosulfonic acid stabilizer (45 ppm Stab-2 and 12 ppm Stab-3). Example 11 shows that 200 ppm Stab-1 provides results similar to Comparative Example K, where Stab-1 was absent. Example 12 (400 ppm) shows the most improved ΔYI after aging, while increasing the loading to 800 ppm resulted in an increase in ΔYI after aging (compare Example 11 with 12). Further increasing the loading to 3000 ppm failed to improve the ΔYI after aging (see Example 13).

Table 5 shows the compositions and properties for Comparative Examples L-M and Examples 14-15.

**Table 5.**

| Component | Unit | L | M | 14 | 15 |
|---|---|---|---|---|---|
| PPP-BPI-BPA | wt% | 99.94 | 99.94 | 99.94 | 99.94 |
| Stab-1 | ppm | 0 | 0 | 800 | 800 |
| Stab-2* | ppm | 0 | 45 | 0 | 45 |
| Stab-3 | ppm | 12 | 12 | 12 | 12 |
| AO | ppm | 600 | 600 | 600 | 600 |

| Properties | | | | | |
|---|---|---|---|---|---|
| Mw | Da | 21119 | 21089 | 21063 | 21097 |
| | | | | | |
| DSC, Tg | C | 219 | 218 | 218 | 218 |
| YI, 0 h | | 4.6 | 3.8 | 4.6 | 4.5 |
| ΔYI, 250 h | | 8.3 | 13.8 | 4.0 | 4.4 |

| | | | | | |
|---|---|---|---|---|---|
| *45 ppm Seenox 412S gives 5 sulfur respectively | | | | | |

Table 5 shows the effect of the addition of aryl benzofuranone (Stab-1) and/or a sulfur-containing stabilizer compound and/or an organosulfonic acid stabilizer (Stab-2 and/or Stab-3) on compositions that include PPP-BPI-BPA as the high heat copolycarbonate. Example 14 shows that the addition of Stab-1 to a composition having organosulfonic acid stabilizer (Stab-3) resulted in no change to the initial YI and a dramatic improvement in ΔYI after aging (compare with Comparative Example L). Example 15 shows that the addition of Stab-1 to a composition having a combination of sulfur-containing stabilizer compound and an organosulfonic acid stabilizer (i.e., Stab-2 and Stab-3) resulted in an increased initial YI and a dramatic improvement in ΔYI after aging (compare with Comparative Example M).

Table 6 shows the compositions and properties for Comparative Example N and Examples 16-17.

**Table 6.**

| Component | Unit | N | 16 | 17 |
|---|---|---|---|---|
| PPP-BPA | wt% | 99.94 | 99.94 | 99.94 |
| Stab-1 | ppm | 0 | 800 | 800 |
| Stab-2 | ppm | 0 | 0 | 0 |
| Stab-3 | ppm | 12 | 0 | 12 |
| AO | ppm | 600 | 600 | 600 |
| YI, 0 h | | 11.0 | 15.3 | 11.4 |
| ΔYI, 250 h | | 6.3 | 4.4 | 2.2 |

Table 5 shows the effect of the addition of sulfur-containing stabilizer compound and/or an organosulfonic acid stabilizer (Stab-1 and/or Stab-3) on compositions that include PPP-BPA as the high heat copolycarbonate. The addition of Stab-1 in the absence of either sulfur-containing stabilizer compound or an organosulfonic acid stabilizer (i.e., Stab-2 or Stab-3) resulted in an increased initial YI and an improved ΔYI after aging as compared to a composition having Stab-2 wherein Stab-1 was absent (compare Example 16 with Comparative Example N). The combination of Stab-1 and Stab-2 demonstrated a further improvement in ΔYI after aging (compare Exampled 16 with Example 15).

Table 6 shows the compositions and properties for Comparative Examples O-Q and Examples 18-23.

**Table 6**

| Component | Unit | O | 18 | 19 | P | 20 | 21 | Q | 22 | 23 |
|---|---|---|---|---|---|---|---|---|---|---|
| IBPI-BPA | wt% | 99.94 | 99.94 | 99.94 | | | | | | |
| PPP-BPI-BPA | wt% | | | | 99.94 | 99.94 | 99.94 | | | |
| PPP-BPA | wt% | | | | | | | 99.94 | 99.94 | 99.94 |
| Stab-1 | ppm | 0 | 0 | 600 | 0 | 0 | 600 | 0 | 0 | 600 |
| Stab-2* | ppm | 45 | 45 | 45 | 45 | 45 | 45 | 45 | 45 | 45 |
| Stab-3 | ppm | 12 | 12 | 12 | 12 | 12 | 12 | 12 | 12 | 12 |
| Stab-4 | ppm | 0 | 600 | 0 | 0 | 600 | 0 | 0 | 600 | 0 |
| AO | ppm | 600 | 600 | 600 | 600 | 600 | 600 | 600 | 600 | 600 |
| YI, 0 h | | 3.3 | 4.4 | 5.0 | 5.8 | 6.1 | 6.5 | 17.1 | 16.5 | 18.0 |
| ΔYI, 250 h | | 14.6 | 11.7 | 6.9 | 12.9 | 11.2 | 7.1 | 13.8 | 9.0 | 8.3 |

| | | | | | | | | | | |
|---|---|---|---|---|---|---|---|---|---|---|
| *45 ppm Seenox 412S is an amount effective to provide 5 ppm sulfur. | | | | | | | | | | |

Table 6 shows the effect of the addition of different aryl benzofuranones (Stab-1 or Stab-4) on the properties of compositions that include a combination of sulfur-containing stabilizer compound and an organosulfonic acid stabilizer (Stab-2 and Stab-3). Examples 18-19, wherein BPI-BPA is the high heat copolycarbonate, both Stab-1 and Stab-4 improved the ΔYI after aging (compare with Comparative Example O). Examples 20-21, wherein PPP-BPI-BPA is the high heat copolycarbonate, both Stab-1 and Stab-4 improved the ΔYI after aging (compare with Comparative Example P). Examples 22-23, wherein PPP-BPA is the high heat copolycarbonate, both Stab-1 and Stab-4 improved the ΔYI after aging (compare with Comparative Example Q). Comparison of Examples 19, 21, and 23 with Examples 18, 20, and 22 clearly shows that Stab-1 was superior to Stab-4, resulting in dramatic improvements to the ΔYI after aging.

The compositions, methods, and articles can alternatively comprise, consist of, or consist essentially of, any appropriate materials, steps, or components herein disclosed.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof" is open and includes any combination comprising at least one of the listed components or properties optionally together with a like or equivalent component or property not listed.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

## Claims

1. A polycarbonate composition comprising:
a high heat copolycarbonate comprising
high heat carbonate units, wherein a homopolycarbonate of the high heat carbonate units has a glass transition temperature of 155-250 °C as determined by differential scanning calorimetry as per ASTM D3418 with a heating rate 20 °C/min and wherein the high heat carbonate units comprise formula 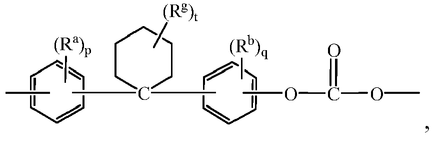 or a combination of formula 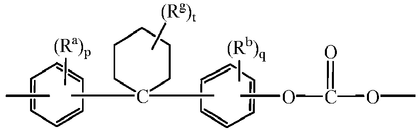 and formula 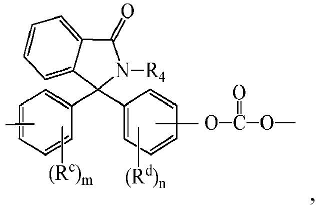 wherein
R^{a} and R^{b} are each independently C₁₋₁₂ alkyl, R^{g} is C₁₋₁₂ alkyl, p and q are each independently 0-4, and t is 0-10;
R^{c} and R^{d} are each independently a C₁₋₁₂ alkyl, C₂₋₁₂ alkenyl, C₃₋₈ cycloalkyl, or C₁₋₁₂ alkoxy, m and n are each independently 0-4, each R³ is independently C₁₋₄ alkyl or hydrogen, R⁴ is C₁₋₆ alkyl or phenyl optionally substituted with 1-5 C₁₋₆ alkyl groups, and g is 0-10; and
optionally low heat carbonate units, wherein a homopolycarbonate of the low heat carbonate units has a glass transition temperature of up to 150 °C as determined by differential scanning calorimetry as per ASTM D3418 with heating rate of 20 °C/min; and
greater than 200 to 5000 ppm of an aryl benzofuranone stabilizer;
optionally, 5-100 ppm of a sulfur-containing stabilizer compound;
optionally, 2-40 ppm of an organosulfonic stabilizer;
optionally, a bisphenol A homopolycarbonate;
each based on the total parts by weight of the composition,
wherein a molded sample of the composition having a thickness of 3.2 millimeters and aged for 250 hours at 150 °C has a change in a yellowness index value of less than 6.0, or less than 5.0, or less than 3.0 as compared with an initial yellowness index value of the molded sample, as measured in accordance with ASTM D1925.

2. The polycarbonate composition of Claim 1, wherein:
the high heat carbonate units are derived from 1,1-bis(4-hydroxyphenyl)-3,3,5-trimethyl-cyclohexane, or a combination of 1,1-bis(4-hydroxyphenyl)-3,3,5-trimethyl-cyclohexane and N-phenyl phenolphthalein bisphenol,
the low heat carbonate units are present and comprise bisphenol A carbonate units.

3. The polycarbonate composition of Claim 1 or Claim 2, further comprising high heat carbonate units derived from 4,4'-(1-phenylethylidene)bisphenol, 4,4'-(3,3-dimethyl-2,2-dihydro-1H-indene-1,1-diyl)diphenol, 1,1-bis(4-hydroxyphenyl)cyclododecane, 3,8-dihydroxy-5a,10b-diphenyl-coumarano-2',3',2,3-coumarane, or a combination thereof.

4. The polycarbonate composition of any one of the preceding claims, wherein the arylbenzofuranone stabilizer has the formula 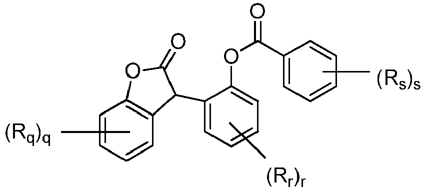 wherein R_{q}, Rᵣ, and Rₛ, are each independently C₁₋₁₂ alkyl, C₂₋₁₂ alkenyl, C₂₋₁₂ alkynyl, C₃₋₈ cycloalkyl, C₁₋₁₂ alkoxy, -OH, -SH, -NH₂, (C₁-C₄alkyl)amino, di(C₁-C₄alkyl)amino, - OP(=O)(ORₜ)₂, -OP(ORₜ)₂, -P(=O)(Rₜ)(ORₜ), -OP(=O)( Rₜ)₂, -P(=O)( Rₜ)₂, -P( Rₜ)₂, wherein each instance of Rₜ is independently C₁₋₁₂ alkyl, C₂₋₁₂ alkenyl, C₂₋₁₂ alkynyl, C₃₋₈ cycloalkyl; q, r, and s are each independently 0-4.

5. The polycarbonate composition of any one of the preceding claims, wherein the arylbenzofuranone stabilizer has the formula 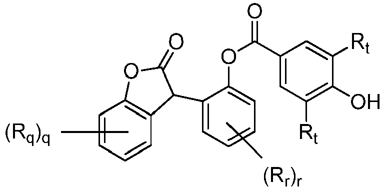 wherein R_{q}, Rᵣ, and Rₜ, are each independently C₁₋₁₂ alkyl, C₂₋₁₂ alkenyl, C₂₋₁₂ alkynyl, C₃₋₈ cycloalkyl, or C₁₋₁₂ alkoxy, each optionally substituted with halogen, -OH, -SH, -NH₂, (C₁-C₄alkyl)amino, di(C₁-C₄alkyl)amino; -OP(=O)(OR^{t})₂, -OP(OR^{t})₂, -P(=O)(R^{t})(OR^{t}), -OP(=O)( R^{t})₂, -P(=O)( R^{t})₂, -P( R^{t})2, wherein each instance of R^{t} is independently C₁₋₁₂ alkyl, C₂₋₁₂ alkenyl, C₂₋₁₂ alkynyl, C₃₋₈ cycloalkyl; q and r are each independently 0-2.

6. The polycarbonate composition of any one of the preceding claims, wherein the aryl benzofuranone stabilizer has a phosphorous-carbon bond, a phosphorous-oxygen bond, or a combination thereof.

7. The polycarbonate composition of any one of the preceding claims, wherein the high heat copolycarbonate further comprises thioether carbonyl functional groups having
the formula -C(=O)-L-S-R, wherein L is a C₁₋₁₂ aliphatic or aromatic linking group and R is a C₁₋₂₀ alkyl, C₆₋₁₈ aryl, or C₇₋₂₄ arylalkylene;
the formula 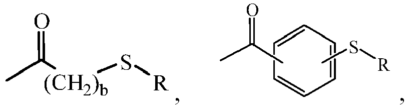 or a combination thereof,
wherein R is a C₁₋₂₀ alkyl, C₆₋₁₈ aryl, or C₇₋₂₄ arylalkylene, preferably a C₁₋₁₄
alkyl, C₆₋₁₂ aryl, or a C₇₋₁₃ arylalkylene, and b is 1-5, preferably 1-2; or the formula 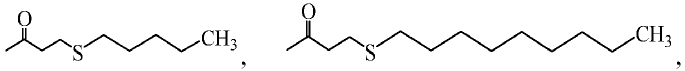 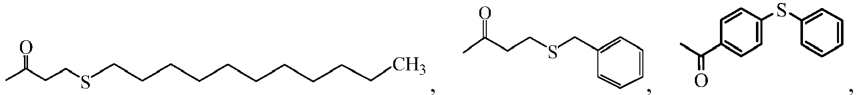 or a combination thereof.

8. The polycarbonate composition of any one of the preceding claims, wherein the sulfur-containing stabilizer compound comprises a C₆₋₄₀ hydrocarbon chain, preferably a C₁₀₋₃₀ hydrocarbon chain, more preferably a C₆₋₄₀ alkyl group or a C₁₀₋₃₀ alkyl group.

9. The polycarbonate composition of any one of the preceding claims, wherein the sulfur-containing stabilizer compound is
a thioether carboxy compound, a thioether dicarboxy compound, a thioether ester compound, or a combination thereof; or
dilauryl thiodipropionate, dicetyl thiodipropionate, dimyristyl thiodipropionate, distearyl thiodipropionate, ditridecyl thiodipropionate, 2-bis[[3-(dodecylthio)-1-oxopropoxy]methyl]propane-1,3-diyl bis[3-(dodecylthio)propionate, or a combination thereof.

10. The polycarbonate composition of any one of the preceding claims, wherein the organosulfonic stabilizer is present in an amount of 2-40 ppm, or 2-20 ppm, or 4-15 ppm, or in an amount effective to provide 0.1-6 ppm, 0.1-3 ppm, 0.1-2 ppm, 0.1-1.5 ppm, or 0.1-1.25 ppm of added sulfur, or a combination thereof, each based on the total weight of the composition.

11. The polycarbonate composition of any one of the preceding claims, wherein the high heat copolycarbonate has a molecular weight of 15,000-80,000 Daltons, as measured by gel permeation chromatography, using bisphenol A homopolycarbonate standards.

12. The polycarbonate composition of any one of the preceding claims, wherein the high heat copolycarbonate has
a sulfur content of up to 20 ppm;
a phenolic endcap content of less than 50 ppm by weight as determined by nuclear magnetic resonance analysis;
a carbamate endcap content of less than 15 ppm by weight as determined by nuclear magnetic resonance analysis;
or a combination thereof,
each based on the total weight of the high heat copolycarbonate.

13. The polycarbonate composition of any one of the preceding claims, further comprising a colorant comprising Solvent Green 3, Solvent Green 28, Solvent Green 38, Pigment Green 50, Pigment Green 36, Solvent Red 52, Solvent Red 101, Solvent Red 111, Solvent Red 135, Solvent Red 169, Solvent Red 179, Solvent Red 207, Pigment Red 101, Disperse Red 22, VatRed 41, Solvent Orange 60, Solvent Orange 63, Disperse Orange 47, Solvent Violet 13, Solvent Violet 14, Solvent Violet 36, Solvent Violet 50, Disperse Violet 26/31, Pigment Blue 29, Pigment Blue 60, Copper phthalocyanine Pigment Blue 15.4, Disperse Blue 73, Solvent Blue 97, Solvent Blue 101, Solvent Blue 104, Solvent Blue 122, Solvent Blue 138, Pigment Yellow 53, Pigment Yellow 138, Pigment Yellow 139, Disperse Yellow 201, Solvent Yellow 33, Solvent Yellow 114, Solvent Yellow 93, Solvent Yellow 98, Solvent Yellow 163, Solvent Yellow 160:1, Solvent Yellow 188, or a combination thereof; preferably Solvent Red 52, Solvent Red 135, or a combination thereof.

14. A method of making the copolycarbonate composition of any one of the preceding claims, the method comprising polymerizing a composition comprising:
a high heat copolycarbonate comprising
high heat carbonate units, wherein a homopolycarbonate of the high heat carbonate units has a glass transition temperature of 150-250 °C as determined per differential scanning calorimetry as per ASTM D3418 with heating rate of 20 °C/min and wherein the high heat carbonate units comprise formulas 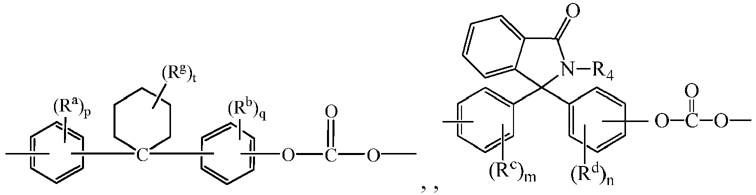
or a combination thereof, wherein
R^{a} and R^{b} are each independently C₁₋₁₂ alkyl, R^{g} is C₁₋₁₂ alkyl, p and q are each independently 0-4, and t is 0-10;
R^{c} and R^{d} are each independently a C₁₋₁₂ alkyl, C₂₋₁₂ alkenyl, C₃₋₈ cycloalkyl, or C₁₋₁₂ alkoxy, m and n are each independently 0-4, each R³ is independently C₁₋₄ alkyl or hydrogen, R⁴ is C₁₋₆ alkyl or phenyl optionally substituted with 1-5 C₁₋₆ alkyl groups, and g is 0-10; and
optionally low heat carbonate units wherein a homopolycarbonate of the low heat carbonate units has a glass transition temperature of 120-150 °C as determined per differential scanning calorimetry as per ASTM D3418 with heating rate of 20 °C/min;
greater than 200-5000 ppm of an aryl benzofuranone stabilizer;
optionally, 5-100 ppm a sulfur-containing stabilizer compound;
optionally, 2-40 ppm of an organosulfonic stabilizer;
optionally, a bisphenol A homopolycarbonate; and
each based on the total weight of the composition.

15. An article comprising the polycarbonate composition of any one of the preceding claims, wherein the article is optionally a camera lens, a sensor lens, an illumination lens, a safety glass lens, an ophthalmic corrective lens, or an imaging lens; optionally wherein a surface of the article is hard coated or metallized.

## Patentansprüche

1. Polycarbonatzusammensetzung, umfassend:
Hochtemperatureignung aufweisendes Copolycarbonat, umfassend
Hochtemperatureignung aufweisende Carbonateinheiten, wobei ein Homopolycarbonat der Hochtemperatureignung aufweisenden Carbonateinheiten eine Glasübergangstemperatur von 155-250 °C bei Bestimmung mittels dynamischer Differenzkalorimetrie gemäß ASTM D3418 mit einer Heizrate von 20 °C/min aufweist und wobei die Hochtemperatureignung aufweisenden Carbonateinheiten die Formel 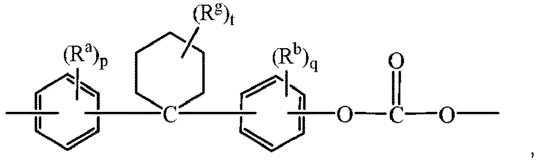 oder eine Kombination der Formel 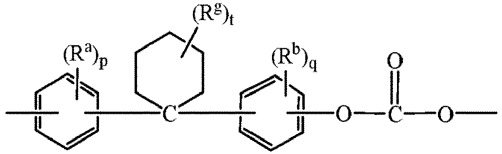 und der Formel 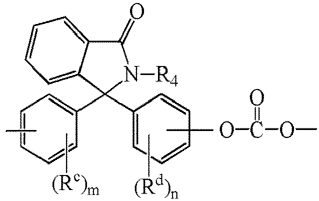 umfassen, wobei
R^{a} und R^{b} jeweils unabhängig für C₁₋₁₂Alkyl stehen, R^{g} für C₁₋₁₂Alkyl steht, p und q jeweils unabhängig für 0-4 stehen und t für 0-10 steht,
R^{c} und R^{d} jeweils unabhängig für ein C₁₋₁₂Alkyl, C₂₋₁₂-Alkenyl, C₃₋₈Cycloalkyl oder C₁₋₁₂Alkoxy stehen, m und n jeweils unabhängig für 0-4 stehen, jeder Rest R³ unabhängig für C₁₋₄Alkyl oder Wasserstoff steht, R⁴ für C₁₋₆Alkyl oder Phenyl steht, das optional mit 1 bis 5 C₁₋₆Alkylgruppen substituiert ist, und g für 0-10 steht, und
optional Niedrigtemperatureignung aufweisende Carbonateinheiten, wobei ein Homopolycarbonat der Niedrigtemperatureignung aufweisenden Carbonateinheiten eine Glasübergangstemperatur von bis zu 150 °C bei Bestimmung mittels dynamischer Differenzkalorimetrie gemäß ASTM D3418 mit einer Heizrate von 20 °C/min aufweist, und
mehr als 200 bis 5000 ppm eines Arylbenzofuranon-Stabilisators,
optional 5 bis 100 ppm einer Schwefel enthaltenden Stabilisatorverbindung,
optional 2 bis 40 ppm eines Organosulfonsäure-Stabilisators,
optional ein Bisphenol-A-Homopolycarbonat,
jeweils bezogen auf die Gesamtgewichtsteile der Zusammensetzung,
wobei eine geformte Probe der Zusammensetzung, die eine Dicke von 3,2 Millimetern und eine Alterung von 250 Stunden bei 150 °C aufweist, eine Änderung eines Vergilbungsindexwerts von weniger als 6,0 oder weniger als 5,0 oder weniger als 3,0 im Vergleich zu einem anfänglichen Vergilbungsindexwert der geformten Probe bei Messung gemäß ASTM D1925 aufweist.

2. Polycarbonatzusammensetzung gemäß Anspruch 1, wobei:
die Hochtemperatureignung aufweisenden Carbonateinheiten von 1,1-Bis(4-hydroxyphenyl)-3,3,5-trimethylcyclohexan oder einer Kombination von 1,1-Bis(4-hydroxyphenyl)-3,3,5-trimethylcyclohexan und N-Phenylphenolphthaleinbisphenol abgeleitet sind,
die Niedrigtemperatureignung aufweisenden Carbonateinheiten vorhanden sind und Bisphenol-A-Carbonateinheiten umfassen.

3. Polycarbonatzusammensetzung gemäß Anspruch 1 oder Anspruch 2, die des Weiteren Hochtemperatureignung aufweisende Carbonateinheiten umfassen, die von 4,4'-(1-Phenylethyliden)bisphenol, 4,4'-(3,3-Dimethyl-2,2-dihydro-1H-inden-1,1-diyl)diphenol, 1,1-Bis(4-hydroxyphenyl)cyclododecan, 3,8-Dihydroxy-5a,10b-diphenyl-cumarano-2',3',2,3-cumaran oder einer Kombination hiervon abgeleitet sind.

4. Polycarbonatzusammensetzung gemäß einem der vorhergehenden Ansprüche, wobei der Arylbenzofuranon-Stabilisator die Formel 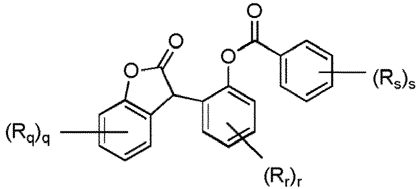 aufweist,
wobei R_{q}, Rᵣ und Rₛ jeweils unabhängig für C₁₋₁₂Alkyl, C₂₋₁₂Alkenyl, C₂₋₁₂Alkinyl, C₃₋₈Cycloalkyl oder C₁₋₁₂Alkoxy, -OH, -SH, -NH₂, (C₁-C₄alkyl)amino, Di(C₁-C₄alkyl)amino, -OP(=O)(ORₜ)₂, -OP(ORₜ)₂, -P(=O)(Rₜ)(ORₜ), -OP(=O)( Rₜ)₂, -P(=O)( Rₜ)₂, -P( Rₜ)₂ stehen, wobei jedes Auftreten von Rₜ unabhängig für C₁₋₁₂Alkyl, C₂₋₁₂Alkenyl, C₂₋₁₂Alkinyl, C₃₋₈Cyclo-alkyl steht und q, r und s jeweils unabhängig für 0 bis 4 stehen.

5. Polycarbonatzusammensetzung gemäß einem der vorhergehenden Ansprüche, wobei der Arylbenzofuranon-Stabilisator die Formel 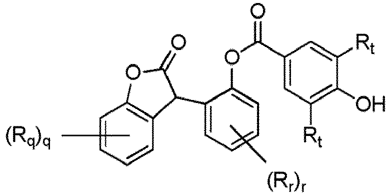 aufweist,
wobei R_{q}, Rᵣ und Rₜ jeweils unabhängig voneinander für C₁₋₁₂Alkyl, C₂₋₁₂Alkenyl, C₂₋₁₂Alkinyl, C₃₋₈Cycloalkyl oder C₁₋₁₂Alkoxy, jeweils optional substituiert mit Halogen, -OH, -SH, -NH₂, (C₁₋C₄Alkyl)amino, Di(C₁-C₄alkyl)amino, -OP(=O)(OR^{t})₂, -OP(OR^{t})₂, -P(=O)(R^{t})(OR^{t}), -OP(=O)( R^{t})₂, -P(=O)( R^{t})₂, -P( R^{t})₂ stehen, wobei jedes Auftreten von R^{t} unabhängig für C₁₋₁₂Alkyl, C₂₋₁₂Alkenyl, C₂₋₁₂Alkinyl, C₃₋₈Cycloalkyl steht und q und r jeweils unabhängig für 0 bis 2 stehen.

6. Polycarbonatzusammensetzung gemäß einem der vorhergehenden Ansprüche, wobei der Arylbenzofuranon-Stabilisator eine Phosphor-Kohlenstoff-Bindung, eine Phosphor-Sauerstoff-Bindung oder eine Kombination hiervon aufweist.

7. Polycarbonatzusammensetzung gemäß einem der vorhergehenden Ansprüche, wobei das Hochtemperatureignung aufweisende Copolycarbonat des Weiteren funktionelle Thioethercarbonylgruppen umfasst, die
die Formel -C(=0)-L-S-R aufweisen, wobei L für eine aliphatische oder aromatische C₁₋₁₂Verbindungsgruppe steht und R für ein C₁₋₂₀Alkyl, C₆₋₁₈Aryl oder C₇₋₂₄Arylalkylen steht,
die Formel 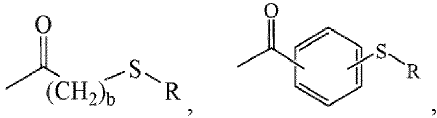 oder eine Kombination hiervon aufweisen, wobei R für ein C₁₋₂₀ Alkyl, C₆₋₁₈ Aryl oder C₇₋₂₄ Arylalkylen, vorzugsweise für ein C₁₋₁₄ Alkyl, C₆₋₁₂ Aryl oder ein C₇₋₁₃ Arylalkylen steht, und b für 1 bis 5, vorzugsweise 1 bis 2 steht; oder
die Formel 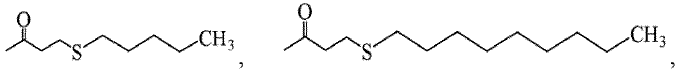 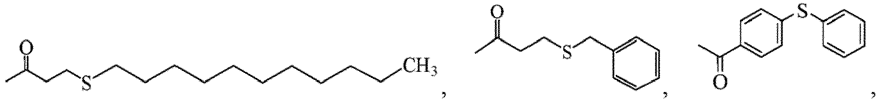 oder eine Kombination hiervon aufweisen.

8. Polycarbonatzusammensetzung gemäß einem der vorhergehenden Ansprüche, wobei die Schwefel enthaltende Stabilisatorverbindung eine C₆₋₄₀Kohlenwasserstoffkette, vorzugsweise eine C₁₀₋₃₀Kohlenwasserstoffkette, bevorzugter eine C₆₋₄₀Alkylgruppe oder eine C₁₀₋₃₀Alkylgruppe umfasst.

9. Polycarbonatzusammensetzung gemäß einem der vorhergehenden Ansprüche, wobei die Schwefel enthaltende Stabilisatorverbindung
eine Thioethercarboxyverbindung, eine Thioetherdicarboxyverbindung, eine Thioetheresterverbindung oder eine Kombination hiervon, oder
Dilaurylthiodipropionat, Dicetylthiodipropionat, Dimyristylthiodipropionat, Distearylthiodipropionat, Ditridecylthiodipropionat, 2-Bis[[3-(dodecylthio)-1- oxopropoxy]-methyl]propan-1,3-diyl-bis[3-(dodecylthio)propionat oder eine Kombination hiervon ist.

10. Polycarbonatzusammensetzung gemäß einem der vorhergehenden Ansprüche, wobei der Organosulfonsäure-Stabilisator in einer Menge von 2-40 ppm oder 2-20 ppm oder 4-15 ppm oder in einer Menge, die ausreicht, um 0,1-6 ppm, 0,1-3 ppm, 0,1-2 ppm, 0,1-1,5 ppm oder 0,1-1,25 ppm an zugesetztem Schwefel bereitzustellen, oder einer Kombinationsmenge hiervon, jeweils bezogen auf das Gesamtgewicht der Zusammensetzung, vorhanden ist.

11. Polycarbonatzusammensetzung gemäß einem der vorhergehenden Ansprüche, wobei das Hochtemperatureignung aufweisende Copolycarbonat ein Molekulargewicht von 15.000 bis 80.000 Dalton bei Messung mittels Gelpermeations-Chromatographie unter Verwendung von Bisphenol-A-Homopolycarbonat-Standards aufweist.

12. Polycarbonatzusammensetzung gemäß einem der vorhergehenden Ansprüche, wobei das Hochtemperatureignung aufweisende Copolycarbonat
einen Schwefelgehalt von bis zu 20 ppm,
einen Phenol-Endüberkappungsgehalt von weniger als 50 Gewichts-ppm gemäß Bestimmung mittels Kernspinresonanzanalyse,
einen Carbamat-Endüberkappungsgehalt von weniger als 15 Gewichts-ppm gemäß Bestimmung mittels Kernspinresonanzanalyse,
oder eine Kombination hiervon,
jeweils bezogen auf das Gesamtgewicht des Hochtemperatureignung aufweisenden Copolycarbonats, aufweist.

13. Polycarbonatzusammensetzung gemäß einem der vorhergehenden Ansprüche, die des Weiteren einen Farbstoff umfasst, der Solvent Green 3, Solvent Green 28, Solvent Green 38, Pigment Green 50, Pigment Green 36, Solvent Red 52, Solvent Red 101, Solvent Red 111, Solvent Red 135, Solvent Red 169, Solvent Red 179, Solvent Red 207, Pigment Red 101, Disperse Red 22, VatRed 41, Solvent Orange 60, Solvent Orange 63, Disperse Orange 47, Solvent Violet 13, Solvent Violet 14, Solvent Violet 36, Solvent Violet 50, Disperse Violet 26/31, Pigment Blue 29, Pigment Blue 60, Kupfer-Phthalocyanin Pigment Blue 15.4, Disperse Blue 73, Solvent Blue 97, Solvent Blue 101, Solvent Blue 104, Solvent Blue 122, Solvent Blue 138, Pigment Yellow 53, Pigment Yellow 138, Pigment Yellow 139, Disperse Yellow 201, Solvent Yellow 33, Solvent Yellow 114, Solvent Yellow 93, Solvent Yellow 98, Solvent Yellow 163, Solvent Yellow 160:1, Solvent Yellow 188 oder eine Kombination hiervon, vorzugsweise Solvent Red 52, Solvent Red 135 oder eine Kombination hiervon, umfasst.

14. Verfahren zur Herstellung der Copolycarbonatzusammensetzung gemäß einem der vorhergehenden Ansprüche, wobei das Verfahren das Polymerisieren einer Zusammensetzung umfasst, die Folgendes umfasst:
ein Hochtemperatureignung aufweisendes Copolycarbonat, umfassend Hochtemperatureignung aufweisende Carbonateinheiten, wobei ein Homopolycarbonat der Hochtemperatureignung aufweisenden Carbonateinheiten eine Glasübergangstemperatur von 150-250 °C bei Bestimmung mittels dynamischer Differenzkalorimetrie gemäß ASTM D3418 mit einer Heizrate von 20 °C/min aufweist und wobei die Hochtemperatureignung aufweisenden Carbonateinheiten die Formeln 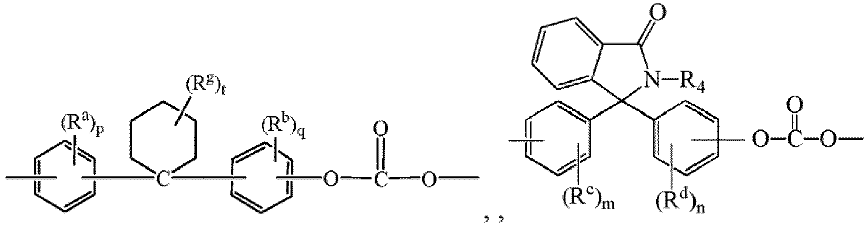 oder eine Kombination hiervon umfassen, wobei
R^{a} und R^{b} jeweils unabhängig für C₁₋₁₂Alkyl stehen, R^{g} für C₁₋₁₂Alkyl steht, p und q jeweils unabhängig für 0-4 stehen und t für 0-10 steht,
R^{c} und R^{d} jeweils unabhängig für ein C₁₋₁₂Alkyl, C₂₋₁₂Alkenyl, C₃₋₈Cyclo-alkyl oder C₁₋₁₂Alkoxy stehen, m und n jeweils unabhängig für 0-4 stehen, jeder Rest R³ unabhängig für C₁₋₄Alkyl oder Wasserstoff steht, R⁴ für C₁₋₆Alkyl oder Phenyl, optional substituiert mit 1-5 C₁₋₆₋ Alkylgruppen, steht und g für 0-10 steht, und
optional Niedrigtemperatureignung aufweisende Carbonateinheiten, wobei ein Homopolycarbonat der Niedrigtemperatureignung aufweisenden Carbonateinheiten eine Glasübergangstemperatur von 120-150 °C bei Bestimmung mittels dynamischer Differenzkalorimetrie gemäß ASTM D3418 mit einer Heizrate von 20 °C/min aufweist,
mehr als 200-5000 ppm eines Arylbenzofuranon-Stabilisators,
optional 5-100 ppm einer Schwefel enthaltenden Stabilisatorverbindung,
optional 2-40 ppm eines Organosulfonsäure-Stabilisators,
optional ein Bisphenol-A-Homopolycarbonat,
jeweils bezogen auf das Gesamtgewicht der Zusammensetzung,
umfasst.

15. Artikel, der die Polycarbonatzusammensetzung gemäß einem der vorhergehenden Ansprüche umfasst, wobei der Artikel optional eine Kameralinse, eine Sensorlinse, eine Beleuchtungslinse, eine Sicherheitsglaslinse, eine ophthalmische Korrekturlinse oder eine Abbildungslinse ist, wobei eine Oberfläche des Artikels optional mit einer harten Beschichtung versehen oder metallisiert ist.

## Revendications

1. Composition de polycarbonate comprenant :
un copolycarbonate haute température comprenant
des motifs de carbonate haute température, où un homopolycarbonate des motifs de carbonate haute température a une température de transition vitreuse de 155 à 250°C telle que déterminée par calorimétrie différentielle à balayage comme par la norme ASTM D3418 avec une vitesse de chauffage de 20°C/min et où les motifs de carbonate haute température comprennent la formule 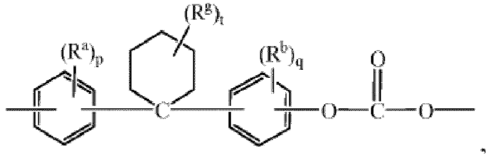 ou
une combinaison de formule 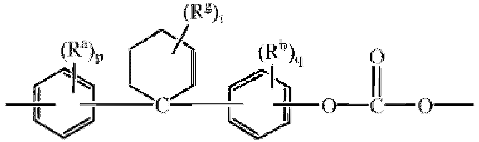
et de formule 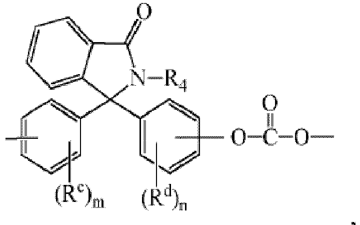
dans lesquelles
R^{a} et R^{b} sont chacun indépendamment alkyle en C₁₋₁₂, R^{g} est alkyle en C₁₋₁₂, p et q sont chacun indépendamment un nombre de 0 à 4, et t est un nombre de 0 à 10 ;
R^{c} et R^{d} sont chacun indépendamment un alkyle en C₁₋₁₂, alcényle en C₂₋₁₂, cycloalkyle en C₃₋₈, ou alcoxy en C₁₋₁₂, m et n sont chacun indépendamment un nombre de 0 à 4, chaque R³ est indépendamment alkyle en C₁₋₄ ou hydrogène, R⁴ est alkyle en C₁₋₆ ou phényle éventuellement substitué par 1 à 5 groupes alkyle en C₁₋₆, et g est un nombre de 0 à 10 ; et
éventuellement des motifs de carbonate basse température, où un homopolycarbonate des motifs de carbonate basse température a une température de transition vitreuse allant jusqu' à 150°C telle que déterminée par calorimétrie différentielle à balayage comme par la norme ASTM D3418 avec une vitesse de chauffage de 20°C/min ; et
plus de 200 à 5000 ppm d'un stabilisateur arylbenzofuranone ;
éventuellement, 5 à 100 ppm d'un composé stabilisateur contenant du soufre ;
éventuellement, 2 à 40 ppm d'un stabilisateur organosulfonique ;
éventuellement, un homopolycarbonate de bisphénol A ;
chacun sur la base des parts totales en poids de la composition,
où un échantillon moulé de la composition ayant une épaisseur de 3,2 millimètres et vieilli pendant 250 heures à 150°C a une variation de valeur d'indice de jaunissement inférieure à 6,0, ou inférieure à 5,0, ou inférieure à 3,0 par rapport à une valeur d'indice de jaunissement initiale de l'échantillon moulé, telle que mesurée conformément à la norme ASTM D1925.

2. Composition de polycarbonate selon la revendication 1, dans laquelle :
les motifs de carbonate haute température sont dérivés du 1,1-bis(4-hydroxyphényl)-3,3,5-triméthyl-cyclohexane, ou d'une combinaison de 1,1-bis(4-hydroxyphényl)-3,3,5-triméthyl-cyclohexane et bisphénol de N-phénylphénolphtaléine,
les motifs de carbonate basse température sont présents et comprennent des motifs de carbonate de bisphénol A.

3. Composition de polycarbonate selon la revendication 1 ou la revendication 2, comprenant en outre des motifs de carbonate haute température dérivés de 4,4'-(1-phényléthylidène)bisphénol, 4,4'-(3,3-diméthyl-2,2-dihydro-1H-indène-1,1-diyl)diphénol, 1,1-bis(4-hydroxyphényl)cyclododécane, 3,8-dihydroxy-5a,10b-diphényl-coumarano-2',3',2,3-coumarane ou une combinaison de ceux-ci.

4. Composition de polycarbonate selon l'une quelconque des revendications précédentes, dans laquelle le stabilisateur arylbenzofuranone a la formule 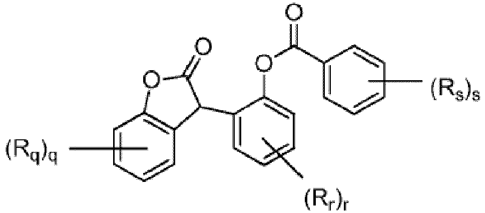 dans laquelle R_{q}, Rᵣ, et Rₛ sont, chacun indépendamment, alkyle en C₁₋₁₂, alcényle en C₂₋₁₂, alcynyle en C₂₋₁₂, cycloalkyle en C₃₋₈, alcoxy en C₁₋₁₂, -OH, -SH, -NH₂, (alkyle en C₁-C₄)amino, di(alkyle en C₁-C₄)amino, -OP(=O)(ORₜ)₂, -OP(ORₜ)₂, -P(=O)(Rₜ)(ORₜ), -OP(=O)(Rₜ)₂, -P(=O)(Rₜ)₂, -P(Rₜ)₂, où chaque instance de Rₜ est indépendamment alkyle en C₁₋₁₂, alcényle en C₂₋₁₂, alcynyle en C₂₋₁₂, cycloalkyle en C₃₋₈ ; q, r, et s sont chacun indépendamment un nombre de 0 à 4.

5. Composition de polycarbonate selon l'une quelconque des revendications précédentes, dans laquelle le stabilisateur arylbenzofuranone a la formule 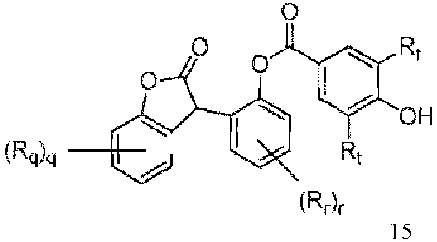 dans laquelle R_{q}, Rᵣ, et Rₜ sont, chacun indépendamment, alkyle en C₁₋₁₂, alcényle en C₂₋₁₂, alcynyle en C₂₋₁₂, cycloalkyle en C₃₋₈, ou alcoxy en C₁₋₁₂, chacun éventuellement substitué par halogène, -OH, -SH, -NH₂, (alkyle en C₁-C₄)amino, di(alkyle en C₁-C₄)amino, -OP(=O)(OR^{t})₂, -OP(OR^{t})₂, -P(=O)(R^{t})(OR^{t}), -OP(=O)(R^{t})₂, -P(=O)(R^{t})₂,-P(R^{t})₂, où chaque instance de R^{t} est indépendamment alkyle en C₁₋₁₂, alcényle en C₂₋₁₂, alcynyle en C₂₋₁₂, cycloalkyle en C₃₋₈ ; q et r sont chacun indépendamment un nombre de 0 à 2.

6. Composition de polycarbonate selon l'une quelconque des revendications précédentes, dans laquelle le stabilisateur arylbenzufuranone a une liaison phosphore-carbone, une liaison phosphore-oxygène, ou une combinaison de ceux-ci.

7. Composition de polycarbonate selon l'une quelconque des revendications précédentes, dans laquelle le copolycarbonate haute température comprend en outre des groupes fonctionnels thioéther-carbonyle ayant la formule -C(=O)-L-S-R, dans laquelle L est un groupe de liaison aliphatique ou aromatique en C₁₋₁₂ et R est un alkyle en C₁₋₂₀, aryle en C₆₋₁₈, ou arylalkylène en C₇₋₂₄ ;
la formule 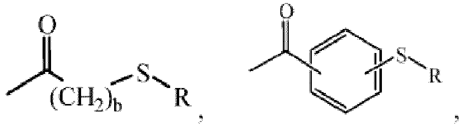 ou une combinaison de celles-ci, dans lesquelles R est un alkyle en C₁₋₂₀, aryle en C₆₋₁₈, ou arylalkylène en C₇₋₂₄, de préférence un alkyle en C₁₋₁₄, aryle en C₆₋₁₂, ou un arylalkylène en C₇₋₁₃, et b est un nombre de 1 à 5, de préférence de 1 à 2 ; ou
la formule 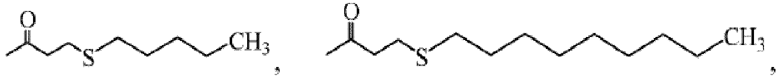 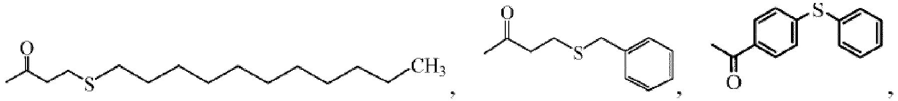 ou une combinaison de celles-ci.

8. Composition de polycarbonate selon l'une quelconque des revendications précédentes, dans laquelle le composé stabilisateur contenant du soufre comprend une chaîne hydrocarbonée en C₆₋₄₀, de préférence une chaîne hydrocarbonée en C₁₀₋₃₀, de manière mieux préférée un groupe alkyle en C₆₋₄₀ ou un groupe alkyle en C₁₀₋₃₀.

9. Composition de polycarbonate selon l'une quelconque des revendications précédentes, dans laquelle le composé stabilisateur contenant du soufre est
un composé thioéther-carboxy, un composé thioéther-dicarboxy, un composé thioéther ester, ou une combinaison de ceux-ci ; ou
le dilauryl thiodipropionate, le dicétyl thiodipropionate, le dimyristyl thiodipropionate, le distéaryl thiodipropionate, le ditridécyl thiodipropionate, le 2-bis[[3-(dodécylthio)-1-oxopropoxy]méthyl]propane-1,3-diyl bis[3-(dodécylthio)propionate, ou une combinaison de ceux-ci.

10. Composition de polycarbonate selon l'une quelconque des revendications précédentes, dans laquelle le composé stabilisateur organosulfonique est présent en une quantité de 2 à 40 ppm, ou 2 à 20 ppm, ou 4 à 15 ppm, ou en une quantité efficace pour fournir 0,1 à 6 ppm, 0,1 à 3 ppm, 0,1 à 2 ppm, 0,1 à 1,5 ppm ou 0,1 à 1,25 ppm de soufre ajouté, ou une combinaison de celles-ci, chacune sur la base du poids total de la composition.

11. Composition de polycarbonate selon l'une quelconque des revendications précédentes, dans laquelle le copolycarbonate haute température a un poids moléculaire de 15 000 à 80 000 daltons, tel que mesuré par chromatographie par perméation sur gel, en utilisant des références d'homopolycarbonate de bisphénol A.

12. Composition de polycarbonate selon l'une quelconque des revendications précédentes, dans laquelle le copolycarbonate haute température a
une teneur en soufre allant jusqu'à 20 ppm ;
une teneur en coiffe terminale phénolique inférieure à 50 ppm en poids telle que déterminée par une analyse par résonance magnétique nucléaire ;
une teneur en coiffe terminale carbamate inférieure à 15 ppm en poids telle que déterminée par une analyse par résonance magnétique nucléaire ;
ou une combinaison de celles-ci,
chacune sur la base du poids total du copolycarbonate haute température.

13. Composition de polycarbonate selon l'une quelconque des revendications précédentes, comprenant en outre un colorant comprenant Solvent Green 3, Solvent Green 28, Solvent Green 38, Pigment Green 50, Pigment Green 36, Solvent Red 52, Solvent Red 101, Solvent Red 111, Solvent Red 135, Solvent Red 169, Solvent Red 179, Solvent Red 207, Pigment Red 101, Disperse Red 22, VatRed 41, Solvent Orange 60, Solvent Orange 63, Disperse Orange 47, Solvent Violet 13, Solvent Violet 14, Solvent Violet 36, Solvent Violet 50, Disperse Violet 26/31, Pigment Blue 29, Pigment Blue 60, Pigment Blue 15.4 à la phtalocyanine de cuivre, Disperse Blue 73, Solvent Blue 97, Solvent Blue 101, Solvent Blue 104, Solvent Blue 122, Solvent Blue 138, Pigment Yellow 53, Pigment Yellow 138, Pigment Yellow 139, Disperse Yellow 201, Solvent Yellow 33, Solvent Yellow 114, Solvent Yellow 93, Solvent Yellow 98, Solvent Yellow 163, Solvent Yellow 160:1, Solvent Yellow 188, ou une combinaison de ceux-ci ; de préférence Solvent Red 52, Solvent Red 135, ou une combinaison de ceux-ci.

14. Méthode de fabrication de la composition de copolycarbonate selon l'une quelconque des revendications précédentes, ladite méthode comprenant la polymérisation d'une composition comprenant :
un copolycarbonate haute température comprenant
des motifs de carbonate haute température, où un homopolycarbonate des motifs de carbonate haute température a une température de transition vitreuse de 150 à 250°C telle que déterminée par calorimétrie différentielle à balayage comme par la norme ASTM D3418 avec une vitesse de chauffage de 20°C/min et où les motifs de carbonate haute température comprennent les formules 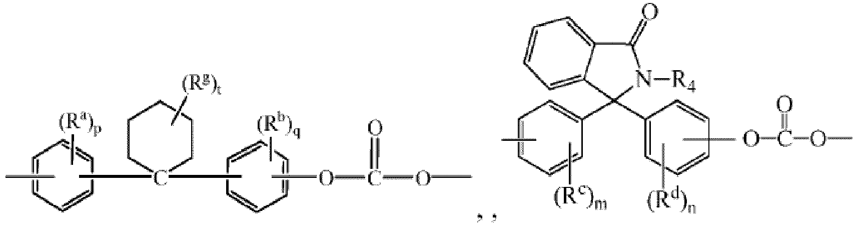 ou une combinaison de celles-ci, dans lesquelles
R^{a} et R^{b} sont chacun indépendamment alkyle en C₁₋₁₂, R^{g} est alkyle en C₁₋₁₂, p et q sont chacun indépendamment un nombre de 0 à 4, et t est un nombre de 0 à 10 ;
R^{c} et R^{d} sont chacun indépendamment un alkyle en C₁₋₁₂, alcényle en C₂₋₁₂, cycloalkyle en C₃₋₈, ou alcoxy en C₁₋₁₂, m et n sont chacun indépendamment un nombre de 0 à 4, chaque R³ est indépendamment alkyle en C₁₋₄ ou hydrogène, R⁴ est alkyle en C₁₋₆ ou phényle éventuellement substitué par 1 à 5 groupes alkyle en C₁₋₆, et g est un nombre de 0 à 10 ; et
éventuellement des motifs de carbonate basse température, où un homopolycarbonate des motifs de carbonate basse température a une température de transition vitreuse de 120 à 150°C telle que déterminée par calorimétrie différentielle à balayage comme par la norme ASTM D3418 avec une vitesse de chauffage de 20°C/min ;
plus de 200 à 5000 ppm d'un stabilisateur arylbenzofuranone ;
éventuellement, 5 à 100 ppm d'un composé stabilisateur contenant du soufre ;
éventuellement, 2 à 40 ppm d'un stabilisateur organosulfonique ;
éventuellement, un homopolycarbonate de bisphénol A ; et
chacun sur la base du poids total de la composition.

15. Article comprenant la composition de polycarbonate selon l'une quelconque des revendications précédentes, l'article étant éventuellement un objectif de caméra, un objectif de capteur, un objectif d'éclairage, un objectif en verre de sécurité, une lentille correctrice ophtalmique, ou une lentille d'imagerie ; éventuellement où une surface de l'article a un revêtement dur ou est métallisée.
